# EUROPEAN PATENT APPLICATION

(11) **EP 4 319 466 A1**
(43) Date of publication of application: **07.02.2024**
(21) Application number: 21933899.3
(22) Date of filing: 31.03.2021
(51) Int. Cl.: H04W 76/28, H04W 76/23

(54) **SIDELINK DISCONTINUOUS RECEPTION COMMAND TRIGGERING METHOD, APPARATUS, AND SYSTEM**

(71) Applicant: Fujitsu Limited, Kawasaki-shi, Kanagawa 211-8588 (JP)
(72) Inventor: LI, Guorong, Beijing 100022 (CN); JI, Pengyu, Beijing 100022 (CN); JIA, Meiyi, Beijing 100022 (CN); YI, Su, Beijing 100022 (CN); WANG, Xin, Beijing 100022 (CN)
(74) Representative: Haseltine Lake Kempner LLP
(86) International application number: PCT/CN2021/084768
(87) International publication number: WO 2022/205239

(57) **Abstract**

Embodiments of this disclosure provide a data transmission method, apparatus and system. The data transmission method is applicable to a first terminal equipment, wherein the first terminal equipment performs sidelink transmission to the second terminal equipment, and the second terminal equipment uses sidelink discontinuous reception (SL DRX), wherein the method includes: the first terminal equipment determines a sidelink resource; the first terminal equipment selects a destination associated with the sidelink resource during a logical channel prioritization (LCP) procedure; and the first terminal equipment transmits the sidelink transmission to the second terminal equipment to which the selected destination corresponds.

## Description

### Field

This disclosure relates to the field of communication technologies.

### Background

In Release 17 of existing standards, enhancement to the New Radio (NR) sidelink is power saving, which enables a terminal equipment with battery limitations to perform sidelink operations in a power efficient manner. A design of NR sidelink of Release 16 in the existing standards is based on an assumption that a terminal equipment is always online during sidelink operations, such as focusing only on a terminal equipment installed in a vehicle with a sufficient battery capacity. In Release 17, a power saving solution is required for vulnerable road users (VRUs), pedestrian users in all Vehicle to Everything (V2X) application scenarios and terminal equipments that require minimal power consumption in public safety and commercial scenarios.

In existing standards, in order to save power, downlink discontinuous reception (DRX) may be configured for a terminal equipment. When DRX is configured for the terminal equipment, it does not need to continuously monitor a physical downlink control channel (PDCCH).

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that for sidelink DRX (SL DRX), the radio access network second group (RAN2) of the Third Generation Partner Program (3GPP) has agreed to introduce a sidelink discontinuous reception (SL DRX) command MAC CE for SL DRX operations in unicast. However, after the introduction of the SL DRX command MAC CE, there exists the following problems:
problem 1): the SL DRX command MAC CE may be transmitted by a transmitting equipment (Tx UE) to a receiving equipment (Rx UE), and it is unclear when the transmitting equipment triggers the SL DRX command MAC CE;
problem 2): when the transmitting equipment has only the SL DRX command MAC CE to be transmitted, in mode-1 mode, how the transmitting equipment makes a network device know the situation, so as to allocate appropriate SL resources;
problem 3): if the SL DRX command MAC CE supports hybrid automatic repeat request (HARQ) feedback enabled, how to perform resource pool selection and a logical channel prioritization (LCP) procedure; and
problem 4): a priority of the SL DRX command MAC CE in sidelink resource allocation and when compared with other MAC CEs or logical channels is unclear.

Addressed to at least one of the above problems, embodiments of this disclosure provide a method and apparatus for triggering a sidelink discontinuous reception command and a system.

According to an aspect of the embodiments of this disclosure, there is provided an apparatus for triggering a sidelink discontinuous reception (SL DRX) command, configured in a first terminal equipment, the first terminal equipment performing sidelink transmission to a second terminal equipment, and the second terminal equipment using sidelink discontinuous reception (SL DRX), wherein the apparatus includes:
a triggering unit configured to trigger a sidelink discontinuous reception command at the MAC layer of the first terminal equipment when one of the following conditions is satisfied that:
a logical channel to which a destination or a pair of source ID and destination ID or a PC5 5G quality of service identifier (PC5 5G QoS identifier, PQI) corresponds has no data to be transmitted or has no data to be transmitted in a current service period or had no data to be transmitted in a past period of time or has no data to be transmitted when a timer expires;
a destination or a pair of source ID and destination ID has no MAC CE to be transmitted or has no MAC CE to be transmitted in a current service period or had no MAC CE to be transmitted in a past period of time or has no MAC CE to be transmitted when a timer expires; and
the upper layer of the first terminal equipment indicates the MAC layer of the first terminal equipment that there is no data to be transmitted or there is no data to be transmitted for a period of time.

According to another aspect of the embodiments of this disclosure, there is provided an apparatus for triggering a scheduling request to which a sidelink discontinuous reception command corresponds, configured in a first terminal equipment, the first terminal equipment performing sidelink transmission to a second terminal equipment, the second terminal equipment using sidelink discontinuous reception (SL DRX), wherein the apparatus includes:
a first triggering unit configured to trigger a first scheduling request to which a sidelink discontinuous reception command corresponds after the sidelink discontinuous reception command is triggered.

According to a further aspect of the embodiments of this disclosure, there is provided an apparatus for selecting a resource pool, configured in a first terminal equipment, the first terminal equipment performing sidelink transmission to a second terminal equipment, and the second terminal equipment using sidelink discontinuous reception (SL DRX), wherein the apparatus includes:
a selecting unit configured to, if a sidelink logical channel has data to be transmitted and the sidelink discontinuous reception command is triggered, select a resource pool according to an HARQ feedback attribute of the sidelink logical channel or according to an HARQ feedback attribute of the sidelink discontinuous reception command based on priorities of the sidelink logical channel and the sidelink discontinuous reception command.

According to still another aspect of the embodiments of this disclosure, there is provided an apparatus for selecting a logical channel, configured in a first terminal equipment, the first terminal equipment performing sidelink transmission to a second terminal equipment, and the second terminal equipment using sidelink discontinuous reception (SL DRX), wherein the apparatus includes:
a determining unit configured to determine a sidelink resource used for transmitting sidelink data; and
a selecting unit configured to select a destination from a first MAC CE and/or a first logical channel in a logical channel prioritization (LCP) procedure, the destination including a second MAC CE or a second logical channel satisfying a predetermined condition and having a highest priority, the first MAC CE satisfying the following condition that: if the sidelink resource is not configured with a PSFCH, an HARQ feedback attribute of the MAC CE is configured to be disabled

According to yet another aspect of the embodiments of this disclosure, there is provided an apparatus for selecting a logical channel, configured in a first terminal equipment, the first terminal equipment performing sidelink transmission to a second terminal equipment, and the second terminal equipment using sidelink discontinuous reception (SL DRX), wherein the apparatus includes:
a determining unit configured to determine a sidelink resource used for transmitting sidelink data; and
a selecting unit configured to,
if the sidelink resource is configured with a PSFCH and an HARQ feedback attribute to which a logical channel or sidelink discontinuous reception command MAC CE with a highest priority satisfying a predetermined condition corresponds is configured to be enabled, select a logical channel or sidelink discontinuous reception command MAC CE with the HARQ feedback attribute being configured to be enabled in an LCP procedure; and
if the sidelink resource is configured with a PSFCH and an HARQ feedback attribute to which a logical channel or sidelink discontinuous reception command MAC CE with a highest priority satisfying a predetermined condition corresponds is configured to be disabled, select a logical channel or sidelink discontinuous reception command MAC CE with the HARQ feedback attribute being configured to be disabled in an LCP procedure.

According to yet still another aspect of the embodiments of this disclosure, there is provided an apparatus for transmitting sidelink transmission, configured in a first terminal equipment, the first terminal equipment performing sidelink transmission to a second terminal equipment, and the second terminal equipment using sidelink discontinuous reception (SL DRX), wherein the apparatus includes:
a transmitting unit configured to transmit a sidelink discontinuous reception command MAC CE (SL DRX command MAC CE) to the second terminal equipment, the sidelink discontinuous reception command MAC CE having a configured or predefined priority.

An advantage of the embodiments of this disclosure exists in that according to the embodiments of this disclosure, the SL DRX command MAC CE may be triggered at a correct time so as to save power consumption of a receiving equipment; and on the other hand, the resource pool is selected and the LCP procedure is performed according to the HARQ attribute of the SL DRX command MAC CE, thereby ensuring reliability of transmission of the SL DRX command MAC CE. Furthermore, the network device may be timely notified to allocate sidelink resources or stop allocating sidelink resources, thereby reducing transmission delay of the SL DRX command MAC CE or avoiding waste of sidelink resources.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a DRX cycle;
FIG. 2 is a schematic diagram of an on-duration timer and an inactivity timer;
FIG. 3 is a schematic diagram of the method for triggering a sidelink discontinuous reception command of an embodiment of this disclosure;
FIG. 4 is a schematic diagram of a method for triggering a scheduling request to which the sidelink discontinuous reception command corresponds of the embodiment of this disclosure;
FIG. 5 is a schematic diagram of the method for selecting a resource pool of the embodiment of this disclosure;
FIG. 6 is a schematic diagram of the method for selecting a logical channel of the embodiment of this disclosure;
FIG. 7 is another schematic diagram of the method for selecting a logical channel of the embodiment of this disclosure;
FIG. 8 is a schematic diagram of the method for transmitting sidelink transmission of the embodiment of this disclosure;
FIG. 9 is a schematic diagram of a scenario of a sidelink buffer status report;
FIG. 10 is a schematic diagram of the method for generating a sidelink buffer status report of the embodiment of this disclosure;
FIG. 11 is a schematic diagram of the apparatus for triggering a sidelink discontinuous reception command of an embodiment of this disclosure;
FIG. 12 is a schematic diagram of the apparatus for triggering a scheduling request to which a sidelink discontinuous reception command corresponds of the embodiment of this disclosure;
FIG. 13 is a schematic diagram of the apparatus for selecting a resource pool of an embodiment of this disclosure;
FIG. 14 is a schematic diagram of the apparatus for selecting a logical channel of an embodiment of this disclosure;
FIG. 15 is another schematic diagram of the apparatus for selecting a logical channel of an embodiment of this disclosure;
FIG. 16 is a schematic diagram of the apparatus for transmitting sidelink transmission of an embodiment of this disclosure;
FIG. 17 is a schematic diagram of the apparatus for generating a sidelink buffer status report of an embodiment of this disclosure; and
FIG. 18 is a schematic diagram of the terminal equipment of an embodiment of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and New Radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

In the embodiments, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), and a station, etc.

In the embodiments, the terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a LTE, and may include one or more terminal equipments described above. In this text, "device" may refer to a network device, and may also refer to a terminal equipment, except otherwise specified.

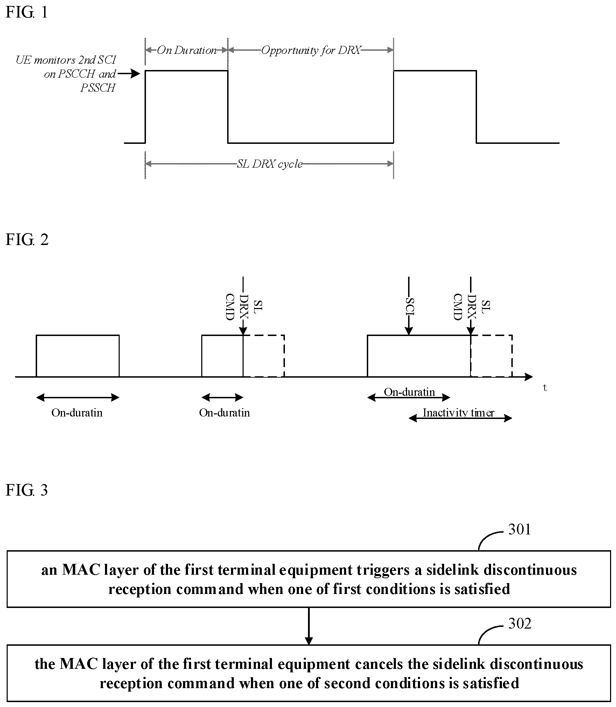

FIG. 1 is schematic diagram of a DRX cycle. As shown in FIG. 1, a DRX cycle specifies an on-duration and possible inactivity times (opportunities for DRX) thereafter. The on-duration is a duration waiting for receiving SCI (including such as monitoring a first stage SCI in a PSCCH and/or a second stage SCI in a PSSCH) after a terminal equipment wakes up. If a terminal equipment successfully decodes SCI used for scheduling a new transmission transmitted to itself, the terminal equipment keeps awake and starts an inactivity timer. The inactivity timer refers to a duration waiting for successfully decoding the SCI starting from the last of successfully decoding the SCI by the terminal equipment; and if the SCI is not successfully decoded within time of the inactivity timer, the terminal equipment will turn back to a sleep state, and the terminal equipment needs to start the inactivity timer after a single time of successfully decoding the SCI that is only used for initial transmission.

In the embodiments of this disclosure, an active time of SL DRX refers to a total time monitoring SCI (such as monitoring a PSCCH and monitoring second stage SCI in a PSSCH) by a terminal equipment, including an on-duration of an SL DRX cycle, a time of performing continuous reception by the terminal equipment when the inactivity timer does not expire, and a time of performing continuous reception by the terminal equipment while waiting for a retransmission opportunity.

In the embodiment of this disclosure, DRX configuration may further include a retransmission timer, which specifies an time duration of expecting that there will exist retransmission.

FIG. 2 is a schematic diagram of an on-duration timer and an inactivity timer.

For SL DRX, as shown in FIG. 2, during the operation of the on-duration timer, if a receiving equipment (Rx LTE) receives a sidelink discontinuous reception command (SL DRX command), the on-duration timer is stopped. For example, if the Rx UE receives an SL DRX command for a destination or a pair of source ID and destination ID or a PC5 5G quality of service identifier (PC5 5G QoS identifier, PQI), an on-duration timer for the destination or the pair of source ID and destination ID or the PQI is stopped; furthermore, during the operation of the on-duration timer or inactivity timer, if the receiving equipment (Rx LTE) receives SCI from a transmitting equipment (Tx UE), such as receiving first stage SCI in a PSCCH and/or second stage SCI in a PSSCH, the inactivity timer is started. During the operation of the inactivity timer, if an SL DRX command is received, the inactivity timer is stopped. For example, if the Rx UE receives an SL DRX command transmitted by a Tx UE for a destination or a pair of source ID and destination ID or a PQI during the operation of the on-duration timer or inactivity timer, the inactivity timer for the destination or the pair of source ID and destination ID or the PQI is stopped.

In the embodiment of this disclosure, description is given by taking that a first terminal equipment perform sidelink transmission to a second terminal equipment as an example. And the second terminal equipment uses SL DRX, or the second terminal equipment is configured with SL DRX, or the second terminal equipment performs SL DRX operations, and so on. Here, the SL DRX configuration may be configured by a network device for the second terminal equipment, or may be preconfigured for the second terminal equipment, or may be configured by the first terminal equipment for the second terminal equipment via a sidelink (such as by using an RRC configuration sidelink message, etc.). Here, the sidelink transmission may include transmission of sidelink data or control information or feedback information or reference signals. And furthermore, from the perspective of sidelink transmission, in the embodiments of this disclosure, the first terminal equipment is a transmitting equipment (Tx UE), and the second terminal equipment is a receiving equipment (Rx UE).

The embodiments of this disclosure shall be described below with reference to the accompanying drawings and specific implementations.

### Embodiment of a first aspect

The embodiment of this disclosure provides a method for triggering a sidelink discontinuous reception command, which shall be described from a side of a first terminal equipment.

FIG. 3 is a schematic diagram of the method for triggering a sidelink discontinuous reception command of the embodiment of this disclosure. As shown in FIG. 3, the method includes:
301: an MAC layer of the first terminal equipment triggers a sidelink discontinuous reception command when one of the following conditions is satisfied that:
a logical channel to which a destination or a pair of source ID and destination ID or a PC5 5G quality of service identifier (PC5 5G QoS identifier, PQI) corresponds has no data to be transmitted or has no data to be transmitted in a current service period or had no data to be transmitted in a past period of time or has no data to be transmitted when a timer expires;
a destination or a pair of source ID and destination ID has no MAC CE to be transmitted or has no MAC CE to be transmitted in a current service period or had no MAC CE to be transmitted in a past period of time or has no MAC CE to be transmitted when a timer expires; and
the upper layer of the first terminal equipment indicates the MAC layer of the first terminal equipment that there is no data to be transmitted or there is no data to be transmitted for a period of time.

In the embodiment of this disclosure, when one of the above first conditions is satisfied, a sidelink discontinuous reception command is triggered. Therefore, the sidelink discontinuous reception command may be triggered or canceled at a correct moment, which may save power consumption of a receiving equipment (Rx LTE) or prevent delay of data transmission from increasing.

In some embodiments, that a logical channel to which a destination or a pair of source ID and destination ID or a PQI has no data to be transmitted refers to that a buffer size of the logical channel to which a destination or a pair of source ID and destination ID or a PQI corresponds is 0. However, this disclosure is not limited thereto, and that the logical channel has no data to be transmitted may also be expressed otherwise.

In some embodiments, the current service period in the above first conditions includes at least one of the following: a cycle of a sidelink service, such as when a sidelink service is a periodic service; a cycle of a sidelink discontinuous reception (SL DRX cycle); a timing cycle of a sidelink discontinuous reception on-duration timer (SL DRX on-duration timer); a timing cycle of a sidelink discontinuous reception inactivity timer (SL DRX inactivity timer); however, this disclosure is not limited thereto. Furthermore, the above timing cycle refers to a value of the timer, which indicates a timing cycle of the timer.

In some embodiments, the timer in the above first conditions includes at least one of the following: a timer configured by a network device (such as via an RRC message) or a predefined timer; a sidelink discontinuous reception on-duration timer (SL DRX on-duration timer); and a sidelink discontinuous reception inactivity timer (SL DRX inactivity timer). In the embodiments, the SL DRX on-duration timer and/or SL DRX inactivity timer may be configured by the network device via system information or an RRC dedicated message, or may be preconfigured; however, this disclosure is not limited thereto.

In some embodiments, the time in the above first conditions includes at least one of the following: a time configured by the network device (such as via an RRC message) or predefined time; a cycle of a sidelink service; a cycle of a sidelink discontinuous reception (SL DRX cycle); a timing cycle of a sidelink discontinuous reception on-duration timer (SL DRX on-duration timer); and a timing cycle of a sidelink discontinuous reception inactivity timer (SL DRX inactivity timer); however, this disclosure is not limited thereto. Furthermore, the above timing cycle refers to a value of the timer, which indicates a timing cycle of the timer.

In some embodiments, the timing cycle of the SL DRX cycle and/or SL DRX on-duration timer and/or SL DRX inactivity timer may be configured by the network device via system information or an RRC dedicated message, or may be preconfigured, or may be configured by an SL peer terminal equipment via an SL RRC message; however, this disclosure is not limited thereto.

In some embodiments, the upper layer in the above first conditions is one of the following: a vehicle-to-everything (V2X) layer, a non-access stratum (NAS), and a radio resource control (RRC) layer; however, this disclosure is not limited thereto.

In some embodiments, the MAC layer of the first terminal equipment generates a sidelink discontinuous reception command MAC CE (SL DRX command MAC CE) when there exists a sidelink resource, and transmits the sidelink discontinuous reception command MAC CE to the second terminal equipment via the sidelink resource.

In the embodiment of this disclosure, as shown in FIG. 3, the method may further include:
302: the MAC layer of the first terminal equipment cancels the sidelink discontinuous reception command when one of the following conditions (second conditions) is satisfied that:
for a destination or a pair of source ID and destination ID or a PQI that the sidelink discontinuous reception command is triggered, new data arrive at a logical channel to which the destination or the pair of source ID and destination ID or the PQI corresponds;
for a destination or a pair of source ID and destination ID that the sidelink discontinuous reception command is triggered, other MAC CEs are triggered;
the upper layer of the first terminal equipment indicates the MAC layer of the first terminal equipment that data will arrive;
a media access control control unit (MAC CE) of the sidelink discontinuous reception command is transmitted in the sidelink;
the first terminal equipment receives hybrid automatic repeat request (HARQ) feedback transmitted by the second terminal equipment; and
the upper layer of the first terminal equipment reconfigures discontinuous reception configuration.

In the embodiment of this disclosure, if one of the second conditions is satisfied, the sidelink discontinuous reception command is canceled. As a result, the sidelink discontinuous reception command may be canceled at a correct time, the receiving equipment (Rx LTE) is enabled to keep monitoring the sidelink SCI and/or data, thereby preventing delay of data transmission from increasing.

In some embodiments, the other MAC CEs may be other MAC CEs to be transmitted on the sidelink, such as an SL CSI reporting MAC CE.

In some embodiments, that the upper layer of the first terminal equipment reconfigures discontinuous reception configuration includes that for a destination or a pair of source ID and destination ID or a PQI that the sidelink discontinuous reception command is triggered, the upper layer of the first terminal equipment reconfigures SL and/or DL discontinuous reception configuration; however, this disclosure is not limited thereto.

In some embodiments, the discontinuous reception configuration includes: a value of the SL DRX on-duration timer and/or a value of the SL DRX inactivity timer and/or a value of an SL DRX retransmission timer and/or a value of the SL DRX cycle and/or an upper bound of latency of CSI reporting.

In some embodiments, the upper layer in the second conditions is one of the following: a vehicle-to-everything (V2X) layer, a non-access stratum (NAS), and a radio resource control (RRC) layer; however, this disclosure is not limited thereto.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the above description is given by taking that operation 301 is executed separately or operations 301 and 302 are executed jointly as an example. However, this disclosure is not limited thereto, and operation 302 may also be executed separately, that is, implementation of operation 302 is not dependent on 301, and the MAC layer of the first terminal equipment cancels the sidelink discontinuous reception command when one of the above second conditions is satisfied.

According to the method of the embodiment of this disclosure, power consumption of the receiving equipment (Rx LTE) may be saved or delay of data transmission may be prevented from increasing.

### Embodiment of a second aspect

The embodiment of this disclosure provides a method for triggering a scheduling request to which a sidelink discontinuous reception command corresponds, which shall be described from a side of a first terminal equipment.

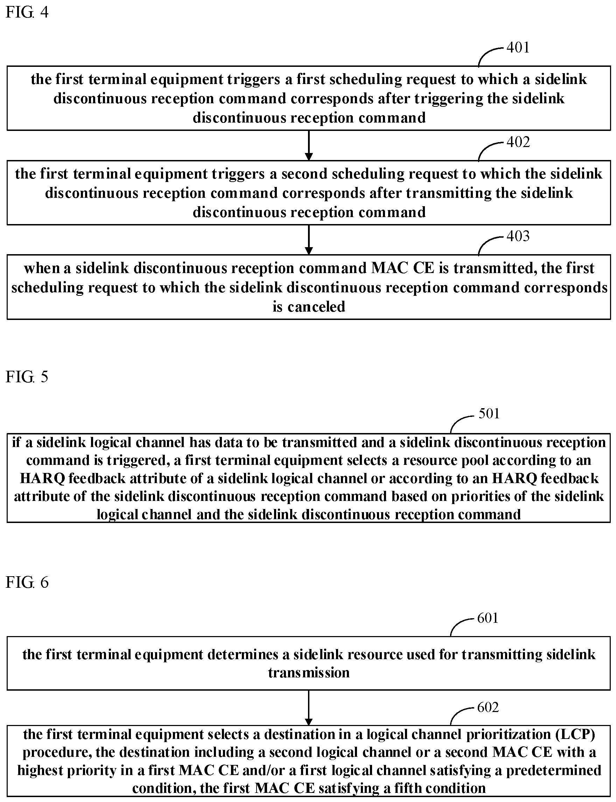

FIG. 4 is a schematic diagram of the method for triggering a scheduling request to which the sidelink discontinuous reception command corresponds of the embodiment of this disclosure. As shown in FIG. 4, the method includes:
401: the first terminal equipment triggers a first scheduling request to which a sidelink discontinuous reception command corresponds after triggering the sidelink discontinuous reception command.

In the above embodiment, when the sidelink discontinuous reception command is triggered, a corresponding SR (referred to as a first scheduling request) is triggered to request a network device to allocate sidelink resources for it, and the network device may allocate appropriate sidelink resources for the first terminal equipment accordingly.

In some embodiments, the first terminal equipment may trigger the first scheduling request to which the sidelink discontinuous reception command corresponds when one of the following conditions (third conditions) is satisfied that:
there exists no sidelink resource (SL grant) for new transmission;
a sidelink resource (SL grant) used for new transmission is unable to accommodate a sidelink discontinuous reception command MAC CE and its sub-header; and
a sidelink resource (SL grant) used for new transmission is unable to accommodate a sub-header of a sidelink discontinuous reception command MAC CE.

In the above embodiment, the network device may allocate an appropriate SL grant for the first terminal equipment, according to the first scheduling request.

In the embodiment of this disclosure, optionally as shown in FIG. 4, the method may further include:
402: the first terminal equipment triggers a second scheduling request to which the sidelink discontinuous reception command corresponds after transmitting the sidelink discontinuous reception command.

In the above embodiment, after the sidelink discontinuous reception command is transmitted, a corresponding SR (referred to as a second scheduling request) is triggered to inform the network device that it is not needed to allocate a sidelink resource for it any longer, and the network device may stop allocating sidelink resources for the first terminal equipment accordingly.

In some embodiments, the first terminal equipment may trigger the second scheduling request to which the sidelink discontinuous reception command corresponds when one of the following conditions (fourth conditions) is satisfied that:
a sidelink resource (SL grant) used for new transmission is able to accommodate a sidelink discontinuous reception command MAC CE and its sub-header and all data waiting to be transmitted; and
a sidelink resource (SL grant) used for new transmission is able to accommodate a sub-header of a sidelink discontinuous reception command MAC CE and all data waiting to be transmitted.

In the above embodiment, the network device may stop allocating SL grants for the first terminal equipment according to the second scheduling request.

In some embodiments, the network device may further configure at least one corresponding SR configuration for the sidelink discontinuous reception command. For example, the first terminal equipment may receive configuration information transmitted by the network device, which includes the above at least one SR configuration. The first terminal equipment may use at least one SR configuration in the at least one SR configuration to transmit the first scheduling request and/or the second scheduling request to which the sidelink discontinuous reception command corresponds.

In some embodiments, the above configuration information is included in RRC signaling, that is, the network device configures the at least one SR configuration via RRC signaling. However, this disclosure is not limited thereto, and the above configuration information may also be included in other signaling transmitted by the network device.

In some embodiments, the SR configuration includes PUCCH resources on a bandwidth part (BWP), that is, the first terminal equipment uses the PUCCH resources on the bandwidth part to transmit the first scheduling request and/or the second scheduling request.

In some embodiments, the above at least one SR configuration is at least one of the following: SR configuration configured by the network device for the sidelink discontinuous reception command MAC CE; SR configuration configured by the network device for a sidelink logical channel; SR configuration configured by the network device for a sidelink channel state information reporting MAC CE; and SR configuration configured by the network device for a logical channel or an MAC CE of a sidelink or an uplink.

For example, after the first terminal equipment triggers the sidelink discontinuous reception command, if one of the above third conditions is satisfied, the first terminal equipment may transmit a first scheduling request to the network device by using at least one of the above SR configurations, requesting the network device to allocate sidelink resources for it.

For another example, after the first terminal equipment transmits the sidelink discontinuous reception command, if one of the above fourth conditions is satisfied, the first terminal equipment may transmit a second scheduling request to the network device by using at least one of the above SR configurations, informing the network device not to allocate sidelink resources for it any longer.

In some embodiments, the network device may configure different SR configurations for the first scheduling request and second scheduling request in the RRC reconfiguration message. Hence, the network device may distinguish different situations. However, this disclosure is not limited thereto, and the first scheduling request and second scheduling request may also have identical SR configurations.

In the embodiment of this disclosure, optionally, as shown in FIG. 4, the method may further include:
403: when a sidelink discontinuous reception command MAC CE is transmitted, the first scheduling request to which the sidelink discontinuous reception command corresponds is canceled.

In the above embodiment, after the sidelink discontinuous reception command MAC CE is transmitted, the SR (the first scheduling request) to which the sidelink discontinuous reception command corresponds is canceled, so as to inform the network device not to allocate sidelink resources for it any longer, and the network device may stop allocating sidelink resources for the first terminal equipment accordingly.

It should be noted that FIG. 4 only schematically illustrate the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 4.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the above description is given by taking that operation 401 is executed separately or operations 401 and 402 are executed jointly as an example. However, this disclosure is not limited thereto, and operation 402 may also be executed separately, that is, implementation of operation 402 is not dependent on 401, and the first terminal equipment triggers the second scheduling request to which the sidelink discontinuous reception command corresponds after transmitting the sidelink discontinuous reception command.

According to the method of the embodiment of this disclosure, waste of sidelink resources may be avoided.

### Embodiment of a third aspect

The embodiment of this disclosure provides a method for selecting a resource pool, which shall be described from a side of a first terminal equipment.

FIG. 5 is a schematic diagram of the method for selecting a resource pool of the embodiment of this disclosure. As shown in FIG. 5, the method includes:
501: if a sidelink logical channel has data to be transmitted and a sidelink discontinuous reception command is triggered, a first terminal equipment selects a resource pool according to an HARQ feedback attribute of a sidelink logical channel or according to an HARQ feedback attribute of the sidelink discontinuous reception command based on priorities of the sidelink logical channel and the sidelink discontinuous reception command.

In the above embodiment, in selecting the resource pool, the priority of the sidelink discontinuous reception command and the HARQ feedback attribute are taken into account, thereby ensuring reliability of transmission of sidelink discontinuous reception command MAC CEs.

In some embodiments, if the priority of the sidelink logical channel is higher than or equal to the priority of the sidelink discontinuous reception command, when the HARQ feedback attribute (sl-HARQ-FeedbackEnabled) of the sidelink logical channel is configured as being enabled, the first terminal equipment selects a resource pool configured with PSFCH resources from resource pools that are configured by the network device or preconfigured. Otherwise, that is, if the HARQ feedback attribute of the sidelink logical channel is not configured as being enabled, the first terminal equipment selects a resource pool from resource pools that are configured by the network device or preconfigured.

In some embodiments, if the priority of the sidelink discontinuous reception command is higher than that of the sidelink logical channel, when the HARQ feedback attribute (sl-HARQ-FeedbackEnabled) of the sidelink discontinuous reception command is configured as being enabled, the first terminal equipment selects a resource pool configured with PSFCH resources from resource pools that are configured by the network device or preconfigured. Otherwise, that is, if the HARQ feedback attribute of the sidelink discontinuous reception command is not configured as being enabled, the first terminal equipment selects a resource pool from resource pools that are configured by the network device or preconfigured.

In the above embodiment, if only the data of the logical channel is to be transmitted, when the HARQ feedback attribute of the sidelink logical channel is configured as being enabled, the first terminal equipment may select a resource pool configured with PSFCH resources from the resource pools that are configured by the network device or preconfigured; otherwise, that is, if the HARQ feedback attribute of the sidelink logical channel is not configured as being enabled, the first terminal equipment select a resource pool from the resource pools that are configured by the network device or preconfigured.

In the above embodiment, if only the sidelink discontinuous reception command is triggered, when the HARQ feedback attribute of the sidelink discontinuous reception command is configured as being enabled, the first terminal equipment may select a resource pool configured with PSFCH resources from the resource pools that are configured by the network device or preconfigured; otherwise, that is, if the HARQ feedback attribute of the sidelink discontinuous reception command is not configured as being enabled, the first terminal equipment select a resource pool from the resource pools that are configured by the network device or preconfigured.

In the above embodiment, if SL-CSI reporting is triggered, the first terminal equipment may select a resource pool from the resource pools that are configured by the network device or preconfigured.

The above embodiments may be described as:

| | | | |
|---|---|---|---|
| • If the logical channel has data to be transmitted and the SL DRX command is triggered: | | | |
| | ■ If the priority of the logical channel is higher than (or equal to) the priority of the SL DRX command: | | |
| | | ◆ If sl-HARQ-FeedbackEnabled of the logical channel is configured as being enabled: | |
| | | | • select a resource pool configured with PSFCH resources from the resource pools |
| | | ◆ Otherwise, | |
| | | | • select a resource pool from the resource pools |
| | ■ Otherwise, | | |
| | | ◆ If sl-HARQ-FeedbackEnabled of the SL DRX command is configured as being enabled | |
| | | | • select a resource pool configured with PSFCH resources from the resource pools |
| | | ◆ Otherwise, | |
| | | | • select a resource pool from the resource pools |
| • Otherwise, if there are data of the logical channel to be transmitted | | | |
| | | ◆ If sl-HARQ-FeedbackEnabled of the logical channel is configured as being enabled | |
| | | | • select a resource pool configured with PSFCH resources from the resource pools |
| | | ◆ Otherwise, | |
| | | | • select a resource pool is selected from the resource pools |
| • Otherwise, if an SL DRX command is triggered | | | |
| | | ◆ If sl-HARQ-FeedbackEnabled of the SL DRX command is configured as being enabled | |
| | | | • select a resource pool configured with PSFCH resources from the resource pools |
| | | ◆ Otherwise, | |
| | | | • select a resource pool from the resource pools |
| • Otherwise, if SL-CSI reporting is triggered | | | |
| | ■ select a resource pool from the resource pools | | |

In the above embodiments, the resource pools configured by the network device refer to resource pools for sidelink transmission (SL transmission) configured by the network device via system information or RRC dedicated signaling, and the preconfigured resource pools refer to resource pools for sidelink transmission configured via preconfiguration.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the method of the embodiment of this disclosure, reliability of transmission of sidelink discontinuous reception command MAC CEs may be ensured.

### Embodiment of a fourth aspect

The embodiment of this disclosure provides a method for selecting a logical channel, which shall be described from a side of a first terminal equipment.

FIG. 6 is a schematic diagram of the method for selecting a logical channel of the embodiment of this disclosure. As shown in FIG. 6, the method includes:
601: the first terminal equipment determines a sidelink resource used for transmitting sidelink transmission; and
602: the first terminal equipment selects a destination in a logical channel prioritization (LCP) procedure, the destination including a second logical channel or a second MAC CE with a highest priority in a first MAC CE and/or a first logical channel satisfying a predetermined condition, the first MAC CE satisfying the following condition (a fifth condition) that:
   if the sidelink resource is not configured with a PSFCH, an HARQ feedback attribute of the MAC CE is configured to be disabled.

In the above embodiments, as to a sidelink LCP procedure or a sidelink MAC PDU assembly procedure or a sidelink MAC PDU generation procedure, for an SL grant configured with no PSFCH, in selecting the destination, the first terminal equipment select a logical channel (a second logical channel) or an MAC CE (a second MAC CE) with a highest priority from logical channels (first logical channels) satisfying predetermined conditions and MAC CEs (first MAC CEs) satisfying the fifth condition, and takes a destination where the selected MAC CE or logical channel is located as the destination.

In the above embodiment, the predetermined conditions include that:
there are sidelink data to be transmitted;
if having a logical channel with a sidelink token greater than 0, and the sidelink token of the logical channel is greater than 0;
if an SL grant is configured grant type 1, and the logical channel is allowed to be transmitted by using the configured grant type 1;
the logical channel is configured to be allowed to use an index of a configured grant associated with the SL grant;
if the SL grant is not configured with a PSFCH, and a sidelink HARQ feedback attribute of the logical channel is set to be disabled.

Reference may be made to relevant techniques for the above predetermined conditions, which shall not be repeated herein any further.

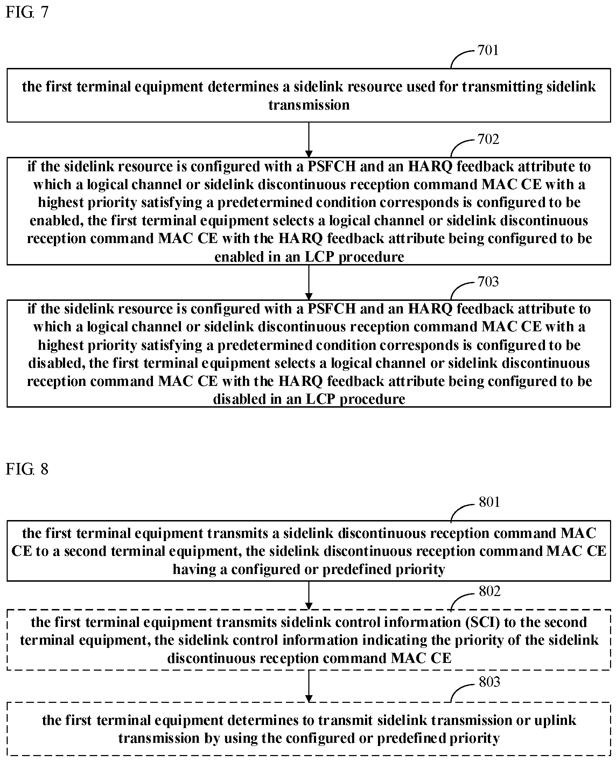

FIG. 7 is another schematic diagram of the method for selecting a logical channel of the embodiment of this disclosure. As shown in FIG. 7, the method includes:
701: the first terminal equipment determines a sidelink resource used for transmitting sidelink transmission;
702: if the sidelink resource is configured with a PSFCH and an HARQ feedback attribute to which a logical channel or sidelink discontinuous reception command MAC CE with a highest priority satisfying a predetermined condition corresponds is configured to be enabled, the first terminal equipment selects a logical channel or sidelink discontinuous reception command MAC CE with the HARQ feedback attribute being configured to be enabled in an LCP procedure; and
703: if the sidelink resource is configured with a PSFCH and an HARQ feedback attribute to which a logical channel or sidelink discontinuous reception command MAC CE with a highest priority satisfying a predetermined condition corresponds is configured to be disabled, the first terminal equipment selects a logical channel or sidelink discontinuous reception command MAC CE with the HARQ feedback attribute being configured to be disabled in an LCP procedure.

In the above embodiment, as to a sidelink LCP procedure, for the SL grant configured with a PSFCH, if the HARQ feedback to which the logical channel or sidelink discontinuous reception command MAC CE with a highest priority corresponds is enabled, the logical channel or sidelink discontinuous reception command MAC CE with HARQ feedback being enabled is selected; and if the HARQ feedback to which the logical channel or sidelink discontinuous reception command MAC CE with a highest priority corresponds is disabled, the logical channel or sidelink discontinuous reception command MAC CE with HARQ feedback being disabled is selected.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

For example, with reference to the embodiments of FIGs. 6 and 7, the current standard may be modified as follows:

| 5.22.1.4.1.2 Selection of logical channels | | | | |
|---|---|---|---|---|
| The MAC entity shall for each SCI corresponding to a new transmission: | | | | |
| | | | 1> select a Destination associated to one of unicast, groupcast and broadcast, having at least one of the MAC CE and the logical channel with the highest priority, **among the logical channels that satisfy all the following conditions, if any, for the SL grant associated to the SCI:** | |
| | | | | 2> SL data is available for transmission; and |
| | | | | 2> *SBj >* 0, in case there is any logical channel having *SBj >* 0; and |
| | | | | *2> sl-configuredGrantType1Allowed,* if configured, is set to *true* in case the SL grant is a Configured Grant Type 1; and |
| | | | | *2> sl AllowedCG-List,* if configured, includes the configured grant index associated to the |
| | | | SL grant; and | |
| | | *2> sl-HARQ-FeedbackEnabled* is set to *disabled,* if PSFCH is not configured for the SL grant associated to the SCI. | | |
| | | **and/or among the MAC CE(s) that satisfy all the following condition, if any, for the SL grant associated to the SCI:** | | |
| | | ***2> sl-HARQ-FeedbackEnabled* is set to *disabled,* if PSFCH is not configured for the SL grant associated to the SCI.** | | |
| | NOTE: If multiple Destinations have the logical channels satisfying all conditions above with the same highest priority or if multiple Destinations have either the MAC CE and/or the logical channels satisfying all conditions above with the same priority as the MAC CE, which Destination is selected among them is up to UE implementation. | | | |
| | 1> select the logical channels **and/or MAC CE(s)** satisfying all the following conditions among the logical channels **and/or MAC CE(s)** belonging to the selected Destination: | | | |
| | | 2> SL data is available for transmission; and | | |
| | | *2> sl-configuredGrantType1Allowed,* if configured, is set to *true* in case the SL grant is a Configured Grant Type 1; and. | | |
| | | *2> sl AllowedCG-List,* if configured, includes the configured grant index associated to the SL grant; and | | |
| | | | 3> if PSFCH is configured for the sidelink grant associated to the SCI: | |
| | | | | *4> sl-HARQ-FeedbackEnabled* is set to *enabled,* if *sl-HARQ-FeedbackEnabled* is set to *enabled* for the highest priority logical channel **or MAC CE** satisfying the above conditions; or |
| | | | | *4> sl-HARQ-FeedbackEnabled* is set to *disabled,* if *sl-HARQ-FeedbackEnabled* is set to *disabled* for the highest priority logical channel **or MAC CE** satisfying the above conditions. |
| | | | 3> else: | |
| | | | | 4> sl-HARQ-FeedbackEnabled is set to disabled. |

In the embodiments in FIG. 6 and FIG. 7, the LCP procedure is executed according to the HARQ attribute of the sidelink discontinuous reception command MAC CE, thereby ensuring reliability of transmission of MAC CEs.

### Embodiment of a fifth aspect

The embodiment of this disclosure provides a method for transmitting sidelink transmission, which shall be described from a side of a first terminal equipment.

FIG. 8 is a schematic diagram of the method for transmitting sidelink transmission of the embodiment of this disclosure. As shown in FIG. 8, the method includes:
801: the first terminal equipment transmits a sidelink discontinuous reception command MAC CE to a second terminal equipment, the sidelink discontinuous reception command MAC CE having a configured or predefined priority.

In the above embodiment, as the sidelink discontinuous reception command MAC CE has a configured or predefined priority, allocation of sidelink resources may be performed according to the priority, or the priority may be compared with priorities of other MAC CEs or logical channels or uplink transmissions, thereby enhancing reliability of sidelink transmission.

In some embodiments, as shown in FIG. 8, the method further includes:
802: the first terminal equipment transmits sidelink control information (SCI) to the second terminal equipment, the sidelink control information indicating the priority of the sidelink discontinuous reception command MAC CE.

In the above embodiment, the first terminal equipment may indicate a priority of SL data to which the SCI corresponds to the second terminal equipment in the SCI, i.e. the priority of the sidelink discontinuous reception command MAC CE, thereby further enhancing reliability of sidelink transmission.

In the embodiment of this disclosure, the priority of the sidelink discontinuous reception command MAC CE indicated in the SCI or a priority of a sidelink discontinuous reception command MAC CE used in UL and SL priority comparison may be an integer between 1 and 8, such as 1 or 2, the smaller a value, the higher a priority.

In some embodiments, as shown in FIG. 8, the method further includes:
803: the first terminal equipment determines to transmit sidelink transmission or uplink transmission by using the configured or predefined priority.

In the above embodiment, the first terminal equipment may determine to transmit sidelink transmission or uplink transmission by using the above priority.

It should be noted that FIG. 8 only schematically illustrate the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 8.

In some embodiments, during the first terminal equipment performs the LCP procedure, the priority of the sidelink discontinuous reception command MAC CE is lower than a priority of a sidelink traffic channel data.

In the above embodiment, during the LCP resource allocation procedure, the priority of the sidelink discontinuous reception command MAC CE may be lower than the priority of the sidelink traffic channel (STCH) data. Hence, it may be ensured that the sidelink traffic data may be transmitted preferentially to the sidelink discontinuous reception command MAC CE, so that the second terminal equipment correctly receives the sidelink traffic data and then stops receiving the sidelink traffic data according to the received sidelink discontinuous reception command MAC CE.

In some embodiments, during the first terminal equipment performs the LCP procedure, the priority of the sidelink discontinuous reception command MAC CE may also be lower than the priority of the data of the sidelink control channel and higher than a priority of a sidelink CSI reporting MAC CE, or lower than a priority of a sidelink CSI reporting MAC CE and higher than the priority of the sidelink traffic channel data, which are not limited in this disclosure. Reference may be made to relevant techniques for a meaning of the priority of the sidelink CSI reporting MAC CE, which shall not be repeated herein any further.

In some embodiments, the first terminal equipment may generate an MAC PDU in generating the sidelink discontinuous receive command MAC CE.

For example, a corresponding standard may be modified as follows:

| | |
|---|---|
| The MAC entity shall not generate a MAC PDU for the HARQ entity if the following conditions are satisfied: | |
| | - there is no Sidelink CSI Reporting MAC CE generated for this PSSCH transmission as specified in clause 5.22.1.7; and |
| | **- there is no SL DRX command MAC CE generated for this PSSCH transmission; and** |
| | - the MAC PDU includes zero MAC SDUs. |

According to the method of the embodiment of this disclosure, reliability of sidelink transmission may be enhanced.

### Embodiment of a sixth aspect

It was found by the inventors that in a current standard, a buffer size field in an SL-BSR MAC CE is described as follows:

| |
|---|
| - Buffer Size: The Buffer Size field identifies the total amount of data available according to the data volume calculation procedure in TSs 38.322 [3] and 38.323 [4] across all logical channels of a logical channel group of a destination **after the MAC PDU has been built (i.e. after the logical channel prioritization procedure, which may result the value of the Buffer Size field to zero).** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

In the current standard, a condition for generating an SL-BSR MAC CE is that there exists a UL-SCH resource for new transmission and the UL-SCH resource is able to accommodate a SL-BSR MAC CE and its sub-header during the LCP procedure. That is, a UL MAC PDU containing the SL-BSR MAC CE will be built.

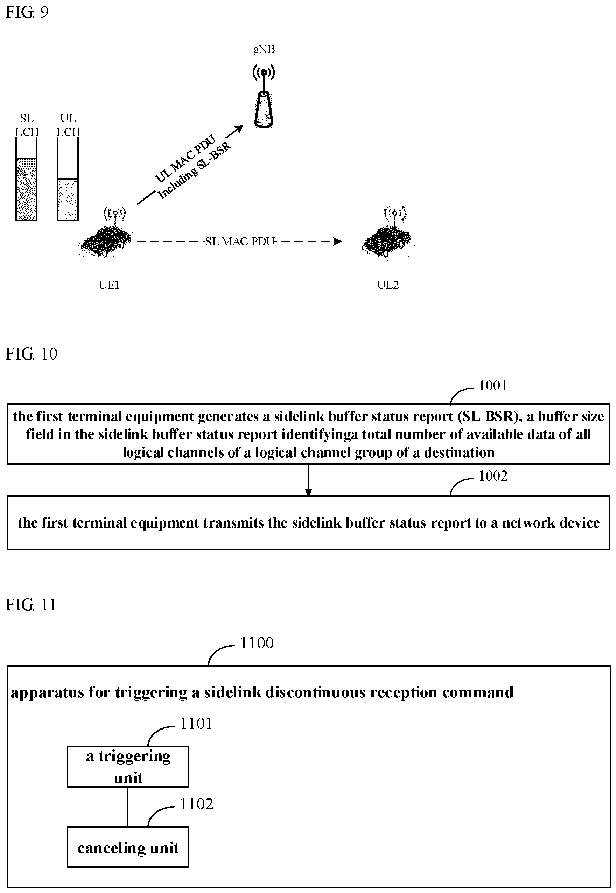

However, in generating the SL-BSR MAC CE, there may or may not be transmissions on the sidelink, as shown in FIG. 9. Therefore, there may or may not be SL MAC PDUs that are built. Whether "MAC PDU" in the text of the above current standard refers to a LTL MAC PDU or an SL MAC PDU is ambiguous.

Assuming that the "MAC PDU" in the text of the above current standard refers to a UL MAC PDU, as a buffer size of the sidelink is not related to construction of the UL MAC PDU or the UL LCP procedure, if there is no data transmission on the sidelink, it will not result in that a value of the buffer size field of the sidelink is 0.

Assuming that the "MAC PDU" in the text of the above current standard refers to an SL MAC PDU, if there is no data transmission on the sidelink, there will be no SL MAC PDU; and if there is data transmission on the sidelink, a value of the buffer size of the SL-BSR will be affected only when the sidelink transmission overlaps with transmission of the SL-BSR in time and a terminal equipment is capable of simultaneously transmitting the sidelink (SL) and an uplink (UL).

Therefore, the definition of "after the MAC PDU has been built (i.e. after the logical channel prioritization procedure, which may result in the value of the Buffer Size field to zero)" in the text of the above standard is unclear.

In order to solve the above problems, the embodiment of this disclosure provides a method for generating a sidelink buffer status report, which shall be described from a side of a first terminal equipment. In the embodiments, the first terminal equipment performs sidelink transmission to a second terminal equipment. From the perspective of transmitting sidelink data transmission, the first terminal equipment of the embodiment of this disclosure is a transmitting equipment (Tx LTE), and the second terminal equipment is a receiving equipment (Rx UE).

FIG. 10 is a schematic diagram of the method for generating a sidelink buffer status report of the embodiment of this disclosure. As shown in FIG. 10, the method includes:
1001: the first terminal equipment generates a sidelink buffer status report (SL BSR), a buffer size field in the sidelink buffer status report identifying at least one of the following:
   a total number of available data of all logical channels of a logical channel group of a destination after an MAC PDU is built, the MAC PDU including a sidelink buffer status report MAC CE, or the MAC PDU being a UL MAC PDU;
   a total number of available data of all logical channels of a logical channel group of a destination when an MAC PDU is built, the MAC PDU including a sidelink buffer status report MAC CE, or the MAC PDU being a UL MAC PDU;
   a total number of available data of all logical channels of a logical channel group of a destination when a sidelink buffer status report MAC CE is generated;
   a total number of available data of all logical channels of a logical channel group of a destination when a sidelink buffer status report MAC CE is triggered;
   a total number of available data of all logical channels of a logical channel group of a destination after a sidelink MAC PDU is built, wherein uplink transmission and sidelink transmission overlap in time and the first terminal equipment has the ability to simultaneously perform uplink transmission and sidelink transmission, and wherein after a sidelink LCP procedure, it will be resulted in that a value of a buffer size field is zero;
1002: the first terminal equipment transmits the sidelink buffer status report to a network device.

In the above embodiment, by modifying description of the buffer size field in the SL-BSR, it is beneficial for the network device to learn a sidelink buffer status of the terminal equipment, so as perform adaptive scheduling to meet QoS requirements of sidelink traffics.

In some embodiments, the buffer size field in the SL-BSR identifies the total number of available data of all logical channels of a logical channel group of a destination after an MAC PDU is built, the MAC PDU including a sidelink buffer status report MAC CE, or the MAC PDU being a UL MAC PDU.

For example, corresponding to the standards, following modifications may be made:

| |
|---|
| - Buffer Size: The Buffer Size field identifies the total amount of data available according to the data volume calculation procedure in TSs 38.322 [3] and 38.323 [4] across all logical channels of a logical channel group of a destination **after the MAC PDU including the SL-BSR MAC CE has been built.** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

Or, corresponding to the standards, following modifications may be made:

| |
|---|
| - Buffer Size: The Buffer Size field identifies the total amount of data available according to the data volume calculation procedure in TSs 38.322 [3] and 38.323 [4] across all logical channels of a logical channel group of a destination **after the UL MAC PDU has been built** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

In some embodiments, the buffer size field in the SL-BSR identifies the total number of available data of all logical channels of a logical channel group of a destination when an MAC PDU is built, the MAC PDU including a sidelink buffer status report MAC CE, or the MAC PDU being a UL MAC PDU.

For example, corresponding to the standards, following modifications may be made:

| |
|---|
| - Buffer Size: The Buffer Size field identifies the total amount of data available according to the data volume calculation procedure in TSs 38.322 [3] and 38.323 [4] across all logical channels of a logical channel group of a destination **when the MAC PDU including the SL-BSR MAC CE is being built.** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

Or, corresponding to the standards, following modifications may be made:

| |
|---|
| - Buffer Size: The Buffer Size field identifies the total amount of data available according to the data volume calculation procedure in TSs 38.322 [3] and 38.323 [4] across all logical channels of a logical channel group of a destination **when the UL MAC PDU is being built** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

In some embodiments, the buffer size field in the SL-BSR identifies the total number of available data of all logical channels of a logical channel group of a destination when a sidelink buffer status report MAC CE is generated.

For example, corresponding to the standards, following modifications may be made:

| |
|---|
| - Buffer Size: The Buffer Size field identifies the total amount of data available according to the data volume calculation procedure in TSs 38.322 [3] and 38.323 [4] across all logical channels of a logical channel group of a destination **when the SL-BSR MAC CE is generated.** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

In some embodiments, the buffer size field in the SL-BSR identifies the total number of available data of all logical channels of a logical channel group of a destination when a sidelink buffer status report MAC CE is triggered.

For example, corresponding to the standards, following modifications may be made:

| |
|---|
| - Buffer Size: The Buffer Size field identifies the total amount of data available according to the data volume calculation procedure in TSs 38.322 [3] and 38.323 [4] across all logical channels of a logical channel group of a destination **when the SL-BSR MAC CE is triggered.** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

In some embodiments, the buffer size field in the SL-BSR identifies the total number of available data of all logical channels of a logical channel group of a destination after a sidelink MAC PDU is built, wherein uplink transmission and sidelink transmission overlap in time and the first terminal equipment has the ability to simultaneously perform uplink transmission and sidelink transmission, and wherein after a sidelink LCP procedure, it will be resulted in that a value of a buffer size field is zero.

For example, corresponding to the standards, following modifications may be made:

| |
|---|
| - Buffer Size: The Buffer Size field identifies the total amount of data available according to the data volume calculation procedure in TSs 38.322 [3] and 38.323 [4] across all logical channels of a logical channel group of a destination **after the sidelink MAC PDU has been built if UL transmission and SL transmission are overlapped in time and the UE has the capability of simultaneous UL transmission and SL transmission (i.e. after the sidelink logical channel prioritization procedure, which may result the value of the Buffer Size field to zero).** The amount of data is indicated in number of bytes. The size of the RLC headers and MAC subheaders are not considered in the buffer size computation. The length of this field is 8 bits. The values for the Buffer Size field are shown in Table 6.1.3.1-2, respectively. For the Truncated SL-BSR format the number of Buffer Size fields included is maximised, while not exceeding the number of padding bits. |

In the above embodiment, the total number of available data of all logical channels of a logical channel group of a destination is obtained in a data amount calculation process in technical specifications 38.322 and 38.323.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner. For example, the last identification mode may be combined with the former four identification modes.

According to the method of the embodiment of this disclosure, behaviors of determining the buffer size field in the SL-BSR in the MAC layer of the terminal equipment is clearly defined, which is beneficial for the network device to learn a sidelink buffer status of the terminal equipment, so as to perform adaptive scheduling to meet QoS requirements of sidelink traffics.

### Embodiment of a seventh aspect

The embodiment of this disclosure provides an apparatus for triggering a sidelink discontinuous reception command.

FIG. 11 is a schematic diagram of the apparatus for triggering a sidelink discontinuous reception command of the embodiment of this disclosure. The apparatus may be a terminal equipment (such as the first terminal equipment described above), or may be one or some components or assemblies configured in the terminal equipment, with contents identical to those in the embodiment of the first aspect being not going to be described herein any further.

As shown in FIG. 11, the apparatus 1100 for triggering a sidelink discontinuous reception command includes:
a triggering unit 1101 configured to trigger a sidelink discontinuous reception command at the MAC layer of the first terminal equipment when one of the following conditions is satisfied that:
a logical channel to which a destination or a pair of source ID and destination ID or a PC5 5G quality of service identifier (PC5 5G QoS identifier, PQI) corresponds has no data to be transmitted or has no data to be transmitted in a current service period or had no data to be transmitted in a past period of time or has no data to be transmitted when a timer expires;
a destination or a pair of source ID and destination ID has no MAC CE to be transmitted or has no MAC CE to be transmitted in a current service period or had no MAC CE to be transmitted in a past period of time or has no MAC CE to be transmitted when a timer expires; and
the upper layer of the first terminal equipment indicates the MAC layer of the first terminal equipment that there is no data to be transmitted or there is no data to be transmitted for a period of time.

In some embodiments, that a logical channel to which a destination or a pair of source ID and destination ID or a PQI corresponds has no data to be transmitted refers to that a buffer size of a logical channel to which a destination or a pair of source ID and destination ID or a PQI corresponds is 0.

In some embodiments, the current service period includes at least one of the following: a cycle of a sidelink service (in a case where the sidelink service is cyclic service); a cycle of a sidelink discontinuous reception (SL DRX cycle); a timing cycle of a sidelink discontinuous reception on-duration timer (SL DRX on-duration timer); a timing cycle of a sidelink discontinuous reception inactivity timer (SL DRX inactivity timer).

In some embodiments, the timer includes at least one of the following: a timer configured by a network device or a predefined timer; a sidelink discontinuous reception on-duration timer (SL DRX on-duration timer); and a sidelink discontinuous reception inactivity timer (SL DRX inactivity timer).

In the embodiments, the SL DRX on-duration timer and/or SL DRX inactivity timer may be configured by the network device via system information or an RRC dedicated message, or may be preconfigured.

In some embodiments, the time includes at least one of the following: a time configured by the network device or a predefined time; a cycle of a sidelink service; a cycle of a sidelink discontinuous reception (SL DRX cycle); a timing cycle of a sidelink discontinuous reception on-duration timer (SL DRX on-duration timer); and a timing cycle of a sidelink discontinuous reception inactivity timer (SL DRX inactivity timer).

In the embodiments, the timing cycle of the SL DRX cycle and/or SL DRX on-duration timer and/or SL DRX inactivity timer may be configured by the network device via system information or an RRC dedicated message, or may be preconfigured, or may be configured by an SL peer terminal equipment via an SL RRC message.

In some embodiments, the upper layer is one of the following: a vehicle-to-everything (V2X) layer, a non-access stratum (NAS), and a radio resource control (RRC) layer.

In some embodiments, the MAC layer of the first terminal equipment generates a sidelink discontinuous reception command MAC CE when there exists a sidelink resource, and transmits the sidelink discontinuous reception command MAC CE to a second terminal equipment via the sidelink resource. Hence, the apparatus 1100 of the embodiment of this disclosure may further include a generating unit (not shown) and a transmitting unit (not shown), wherein the generating unit generates the above sidelink discontinuous reception command MAC CE, and the transmitting unit transmits the sidelink discontinuous reception command MAC CE to the second terminal equipment via the obtained sidelink resource.

In some embodiments, as shown in FIG. 11, the apparatus 1100 further includes:
a canceling unit 1102 configured to cancel the sidelink discontinuous reception command at the MAC layer of the first terminal equipment when one of the following conditions is satisfied that:
for a destination or a pair of source ID and destination ID or a PQI that the sidelink discontinuous reception command is triggered, new data arrive at a logical channel to which the destination or the pair of source ID and destination ID or the PQI corresponds;
for a destination or a pair of source ID and destination ID that the sidelink discontinuous reception command is triggered, other MAC CEs are triggered;
the upper layer of the first terminal equipment indicates the MAC layer of the first terminal equipment that data will arrive;
a media access control control unit (MAC CE) of the sidelink discontinuous reception command is transmitted in the sidelink;
the first terminal equipment receives hybrid automatic repeat request (HARQ) feedback transmitted by the second terminal equipment; and
the upper layer of the first terminal equipment reconfigures discontinuous reception configuration.

In some embodiments, the other MAC CEs may be other MAC CEs to be transmitted on the sidelink, such as an SL CSI reporting MAC CE.

In some embodiments, the upper layer is one of the following: a vehicle-to-everything (V2X) layer, a non-access stratum (NAS), and a radio resource control (RRC) layer.

In some embodiments, that the upper layer of the first terminal equipment reconfigures discontinuous reception configuration includes that:
for a destination or a pair of source ID and destination ID or a PQI that the sidelink discontinuous reception command is triggered, the upper layer of the first terminal equipment reconfigures SL and/or DL discontinuous reception configuration.

In some embodiments, the discontinuous reception configuration includes: a value of the SL on-duration timer and/or a value of the inactivity timer and/or a value of an SL retransmission timer and/or a value of the SL DRX cycle and/or an upper bound of latency of CSI reporting.

It should be noted that the components or modules related to this disclosure are only described above. However, this disclosure is not limited thereto, and the apparatus 1100 may further include other components or modules, and reference may be made to related techniques for particulars of these components or modules. And furthermore, the modules in FIG. 11 may be implemented separately, or may be implemented jointly by combining them arbitrarily. For example, and triggering unit 1101 and the canceling unit 1102 may be implemented separately, and this disclosure is not limited thereto.

Furthermore, for the sake of simplicity, connection relationships between the components or modules or signal profiles are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, the sidelink discontinuous reception command MAC CE may be triggered or canceled at a correct time, which may save power consumption of a receiving equipment or prevent delay of data transmission from increasing.

### Embodiment of an eighth aspect

The embodiment of this disclosure provides an apparatus for triggering a scheduling request to which a sidelink discontinuous reception command corresponds.

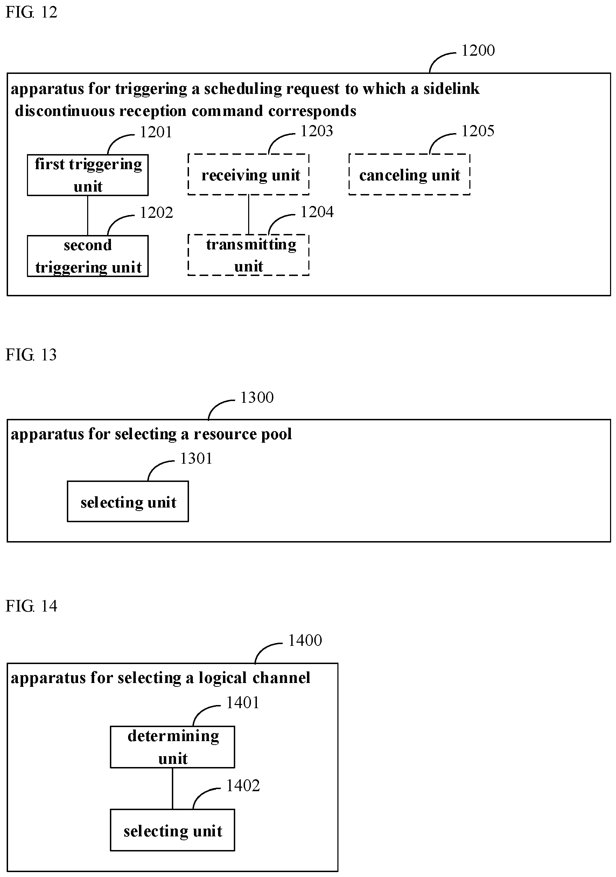

FIG. 12 is a schematic diagram of the apparatus for triggering a scheduling request to which a sidelink discontinuous reception command corresponds of the embodiment of this disclosure. The apparatus may be a terminal equipment (such as the first terminal equipment described above), or may be one or some components or assemblies configured in the terminal equipment, with contents identical to those in the embodiment of the second aspect being not going to be described herein any further.

As shown in FIG. 12, the apparatus 1200 for triggering a scheduling request to which a sidelink discontinuous reception command corresponds includes:
a first triggering unit 1201 configured to trigger a first scheduling request to which a sidelink discontinuous reception command corresponds after triggering the sidelink discontinuous reception command.

In the above embodiment, the first triggering unit 1201 triggers the first scheduling request to which the sidelink discontinuous reception command corresponds when one of the following conditions is satisfied that: there exists no sidelink resource used for new transmission; a sidelink resource used for new transmission is unable to accommodate a sidelink discontinuous reception command MAC CE and its sub-header; and a sidelink resource used for new transmission is unable to accommodate a sub-header of a sidelink discontinuous reception command MAC CE.

In some embodiments, as shown in FIG. 12, the apparatus 1200 further includes:
a second triggering unit 1202 configured to trigger a second scheduling request to which the sidelink discontinuous reception command corresponds after the sidelink discontinuous reception command is transmitted.

In some embodiments, the second triggering unit 1202 triggers the second scheduling request to which the sidelink discontinuous reception command corresponds when one of the following conditions is satisfied that: a sidelink resource used for new transmission is able to accommodate a sidelink discontinuous reception command MAC CE and its sub-header and all data waiting to be transmitted; and a sidelink resource used for new transmission is able to accommodate a sub-header of a sidelink discontinuous reception command MAC CE and all data waiting to be transmitted.

In some embodiments, as shown in FIG. 12, the apparatus 1200 further includes:
a receiving unit 1203 configured to receive configuration information transmitted by a network device, the configuration information including at least one SR configuration; and
a transmitting unit 1204 configured to transmit the first scheduling request and/or the second scheduling request to which the sidelink discontinuous reception command corresponds by using at least one SR configuration in the at least one SR configuration.

In the embodiments, the transmitting unit 1204 may be combined with the first triggering unit 1201 and/or the second triggering unit 1202.

In some embodiments, the configuration information is contained in RRC signaling.

In some embodiments, the SR configuration includes PUCCH resources on a bandwidth part (BWP). Hence, the transmitting unit 1204 may transmit the above first scheduling request and/or the second scheduling request by using the PUCCH resources.

In some embodiments, the at least one SR configuration is at least one of the following:
SR configuration configured by the network device for the sidelink discontinuous reception command MAC CE;
SR configuration configured by the network device for a sidelink logical channel;
SR configuration configured by the network device for a sidelink channel state information reporting MAC CE; and
SR configuration configured by the network device for a logical channel or an MAC CE of a sidelink or an uplink.

In some embodiments, the network device may configure different SR configurations for the first scheduling request and second scheduling request in the RRC reconfiguration message.

In some embodiments, as shown in FIG. 12, the apparatus 1200 further includes:
a canceling unit 1205 configured to, when a sidelink discontinuous reception command MAC CE is transmitted, cancel the first scheduling request to which the sidelink discontinuous reception command corresponds.

It should be noted that the components or modules related to this disclosure are only described above. However, this disclosure is not limited thereto, and the apparatus 1200 may further include other components or modules, and reference may be made to related techniques for particulars of these components or modules. And furthermore, the modules in FIG. 12 may be implemented separately, or may be implemented jointly by combining them arbitrarily. For example, and first triggering unit 1201 and the second triggering unit 1202 may be implemented separately, and this disclosure is not limited thereto.

Furthermore, for the sake of simplicity, connection relationships between the components or modules or signal profiles are only illustrated in FIG. 12. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, the network device may be informed to stop allocating sidelink resources, thereby avoiding waste of sidelink resources.

### Embodiment of a ninth aspect

The embodiment of this disclosure provides an apparatus for selecting a resource pool.

FIG. 13 is a schematic diagram of the apparatus for selecting a resource pool of the embodiment of this disclosure. The apparatus may be a terminal equipment (such as the first terminal equipment described above), or may be one or some components or assemblies configured in the terminal equipment, with contents identical to those in the embodiment of the third aspect being not going to be described herein any further.

In the embodiment of this disclosure, the apparatus for selecting a resource pool is configured in a first terminal equipment, the first terminal equipment performing sidelink transmission to a second terminal equipment, and the second terminal equipment using SL DRX. As shown in FIG. 13, the apparatus 1300 for selecting a resource pool includes:
a selecting unit 1301 configured to, if a sidelink logical channel has data to be transmitted and a sidelink discontinuous reception command is triggered, select a resource pool according to an HARQ feedback attribute of the sidelink logical channel or according to an HARQ feedback attribute of the sidelink discontinuous reception command based on priorities of the sidelink logical channel and the sidelink discontinuous reception command.

In some embodiments, if the priority of the sidelink logical channel is higher than or equal to the priority of the sidelink discontinuous reception command, when the HARQ feedback attribute of the sidelink logical channel is configured as being enabled, the selecting unit 1301 selects a resource pool configured with PSFCH resources from resource pools that are configured by the network device or preconfigured.

In some embodiments, if the priority of the sidelink discontinuous reception command is higher than that of the sidelink logical channel, when the HARQ feedback attribute of the sidelink discontinuous reception command is configured as being enabled, the selecting unit 1301 selects a resource pool configured with PSFCH resources from resource pools that are configured by the network device or preconfigured.

It should be noted that the components or modules related to this disclosure are only described above. However, this disclosure is not limited thereto, and the apparatus 1300 may further include other components or modules, and reference may be made to related techniques for particulars of these components or modules.

Furthermore, the above components or modules may be implemented by hardware, such as a processor, a memory, a transmitter, and a receiver, etc., which are not limited in the embodiment of this disclosure.

According to the apparatus of the embodiment of this disclosure, reliability of transmission of sidelink discontinuous reception command MAC CEs may be ensured.

### Embodiment of a tenth aspect

The embodiment of this disclosure provides an apparatus for selecting a logical channel.

FIG. 14 is a schematic diagram of the apparatus for selecting a logical channel of the embodiment of this disclosure. The apparatus may be a terminal equipment (such as the first terminal equipment described above), or may be one or some components or assemblies configured in the terminal equipment, with contents identical to those in the example in FIG. 6 in the embodiment of the fourth aspect being not going to be described herein any further.

As shown in FIG. 14, the apparatus 1400 for selecting a logical channel includes:
a determining unit 1401 configured to determine a sidelink resource used for transmitting sidelink transmission;
a selecting unit 1402 configured to select a destination in a logical channel prioritization (LCP) procedure, the destination including a second logical channel or a second MAC CE with a highest priority in a first MAC CE and/or a first logical channel satisfying a predetermined condition, the first MAC CE satisfying the following condition that:
   if the sidelink resource is not configured with a PSFCH, an HARQ feedback attribute of the MAC CE is configured to be disabled.

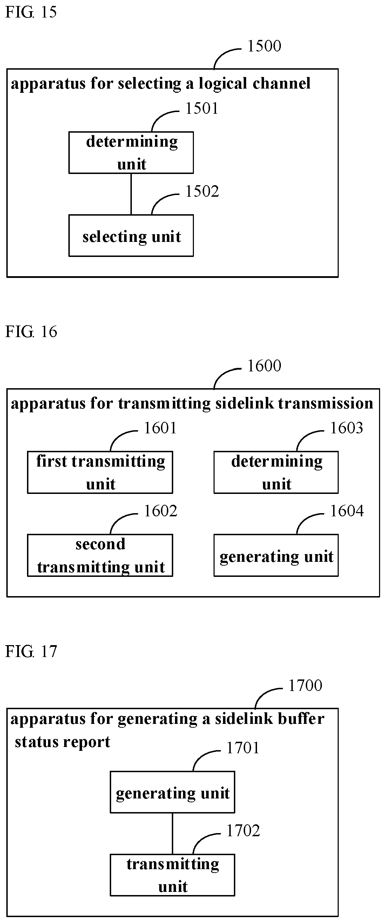

FIG. 15 is another schematic diagram of the apparatus for selecting a logical channel of the embodiment of this disclosure. The apparatus may be a terminal equipment (such as the first terminal equipment described above), or may be one or some components or assemblies configured in the terminal equipment, with contents identical to those in the example in FIG. 7 in the embodiment of the fourth aspect being not going to be described herein any further.

As shown in FIG. 15, the apparatus 1500 for selecting a logical channel includes:
a determining unit 1501 configured to determine a sidelink resource used for transmitting sidelink transmission;
a selecting unit 1502 configured to, if the sidelink resource is configured with a PSFCH and an HARQ feedback attribute to which a logical channel or sidelink discontinuous reception command MAC CE with a highest priority satisfying a predetermined condition corresponds is configured to be enabled, select a logical channel or sidelink discontinuous reception command MAC CE with the HARQ feedback attribute being configured to be enabled in an LCP procedure,
and if the sidelink resource is configured with a PSFCH and an HARQ feedback attribute to which a logical channel or sidelink discontinuous reception command MAC CE with a highest priority satisfying a predetermined condition corresponds is configured to be disabled, select a logical channel or sidelink discontinuous reception command MAC CE with the HARQ feedback attribute being configured to be disabled in an LCP procedure.

It should be noted that the components or modules related to this disclosure are only described above. However, this disclosure is not limited thereto, and the apparatuses 1400 and 1500 may further include other components or modules, and reference may be made to related techniques for particulars of these components or modules.

Furthermore, for the sake of simplicity, connection relationships between the components or modules or signal profiles are only illustrated in FIGs. 14 and 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, reliability of transmission of sidelink discontinuous reception command MAC CEs may be ensured.

### Embodiment of an eleventh aspect

The embodiment of this disclosure provides an apparatus for transmitting sidelink transmission.

FIG. 16 is a schematic diagram of the apparatus for transmitting sidelink transmission of the embodiment of this disclosure. The apparatus may be a terminal equipment (such as the first terminal equipment described above), or may be one or some components or assemblies configured in the terminal equipment, with contents identical to those in the embodiment of the fifth aspect being not going to be described herein any further.

As shown in FIG. 16, the apparatus 1600 for transmitting sidelink transmission includes:
a first transmitting unit 1601 configured to transmit a sidelink discontinuous reception (SL DRX) command MAC CE to a second terminal equipment, the sidelink discontinuous reception command MAC CE having a configured or predefined priority.

In some embodiments, as shown in FIG. 16, the apparatus 1600 further includes:
a second transmitting unit 1602 configured to transmit sidelink control information (SCI) to the second terminal equipment, the sidelink control information indicating the priority of the sidelink discontinuous reception command MAC CE.

In some embodiments, as shown in FIG. 16, the apparatus 1600 further includes:
a determining unit 1603 configured to determine to transmit sidelink transmission or uplink transmission by using the configured or predefined priority.

In some embodiments, during the first terminal equipment performs the LCP procedure, the priority of the sidelink discontinuous reception command MAC CE is lower than a priority of a sidelink traffic channel data.

In some embodiments, as shown in FIG. 16, the apparatus 1600 further includes:
a generating unit 1604 configured to generate an MAC PDU in generating the sidelink discontinuous reception command MAC CE.

It should be noted that the components or modules related to this disclosure are only described above. However, this disclosure is not limited thereto, and the apparatus 1600 may further include other components or modules, and reference may be made to related techniques for particulars of these components or modules.

Furthermore, for the sake of simplicity, connection relationships between the components or modules or signal profiles are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, reliability of sidelink transmission is enhanced.

### Embodiment of a twelfth aspect

The embodiment of this disclosure provides an apparatus for generating a sidelink buffer status report.

FIG. 17 is a schematic diagram of the apparatus for generating a sidelink buffer status report of the embodiment of this disclosure. The apparatus may be a terminal equipment (such as the first terminal equipment described above), or may be one or some components or assemblies configured in the terminal equipment, with contents identical to those in the embodiment of the sixth aspect being not going to be described herein any further.

As shown in FIG. 17, the apparatus 1700 for generating a sidelink buffer status report includes a generating unit 1701 and a transmitting unit 1702.

The generating unit 1701 generates a sidelink buffer status report (SL BSR), a buffer size field in the sidelink buffer status report identifying at least one of the following:
a total number of available data of all logical channels of a logical channel group of a destination after an MAC PDU is built, the MAC PDU including a sidelink buffer status report MAC CE, or the MAC PDU being a UL MAC PDU;
a total number of available data of all logical channels of a logical channel group of a destination when an MAC PDU is built, the MAC PDU including a sidelink buffer status report MAC CE, or the MAC PDU being a UL MAC PDU;
a total number of available data of all logical channels of a logical channel group of a destination when a sidelink buffer status report MAC CE is generated;
a total number of available data of all logical channels of a logical channel group of a destination when a sidelink buffer status report MAC CE is triggered;
a total number of available data of all logical channels of a logical channel group of a destination after a sidelink MAC PDU is built, wherein uplink transmission and sidelink transmission overlap in time and the first terminal equipment has the ability to simultaneously perform uplink transmission and sidelink transmission, and wherein after a sidelink LCP procedure, it will be resulted in that a value of a buffer size field is zero.

The transmitting unit 1702 transmits the sidelink buffer status report to a network device.

It should be noted that the components or modules related to this disclosure are only described above. However, this disclosure is not limited thereto, and the apparatus 1700 may further include other components or modules, and reference may be made to related techniques for particulars of these components or modules.

Furthermore, the above components or modules may be implemented by hardware, such as a processor, a memory, a transmitter, and a receiver, etc., which are not limited in the embodiment of this disclosure.

According to the apparatus of the embodiment of this disclosure, it is beneficial for the network device to learn a sidelink buffer status of the terminal equipment, so as perform adaptive scheduling to meet QoS requirements of sidelink traffics.

### Embodiment of a thirteenth aspect

The embodiment of this disclosure provides a communication system, with contents identical to those in the embodiments of the first to twelfth aspects being not going to be described herein any further.

In some embodiments, the communication system may at least include a first terminal equipment and a second terminal equipment, the first terminal equipment performing sidelink transmission to the second terminal equipment, and the second terminal equipment using SL DRX. In the embodiments, the first terminal equipment is taken as a transmitting equipment and configured to carry out the method as described in any one of the embodiments of the first to sixth aspects, and the second terminal equipment is taken as a receiving equipment and configured to receive sidelink transmission transmitted by the first terminal equipment at an SL DRX active time.

In some embodiments, the communication system may at least include a first terminal equipment, a second terminal equipment and a network device. In the embodiments, the first terminal equipment is taken as a transmitting equipment and configured to carry out the method as described in any one of the embodiments of the first to sixth aspects, the second terminal equipment is taken as a receiving equipment and configured to receive sidelink transmission transmitted by the first terminal equipment at an SL DRX active time, and the network device is configured to allocate sidelink resources for the first terminal equipment.

The embodiment of this disclosure further provides a terminal equipment.

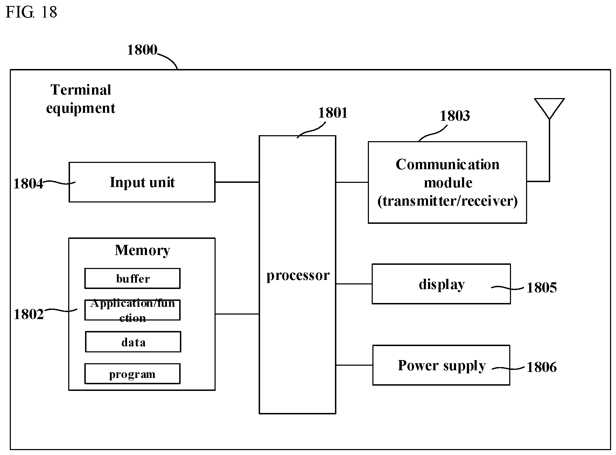

FIG. 18 is a schematic diagram of the terminal equipment of the embodiment of this disclosure. As shown in FIG. 18, the terminal equipment 1800 may include a processor 1801 and a memory 1802, the memory 1802 storing data and a program and being coupled to the processor 1801. It should be noted that this figure is illustrative only, and other types of structures may also be used, so as to supplement or replace this structure and achieve a telecommunications function or other functions.

For example, the processor 1801 may be configured to execute a program to carry out the methods as described in any one of the embodiments of the first to sixth aspects.

As shown in FIG. 18, the terminal equipment 1800 may further include a communication module 1803, an input unit 1804, a display 1805, and a power supply 1806; wherein functions of the above components are similar to those in the related art, which shall not be described herein any further. It should be noted that the terminal equipment 1800 does not necessarily include all the parts shown in FIG. 18, and the above components are not necessary. Furthermore, the terminal equipment 1800 may include parts not shown in FIG. 18, and the related art may be referred to.

An embodiment of this disclosure provides a computer readable program, which, when executed in a terminal equipment, will cause the terminal equipment to carry out the methods as described in any one of the embodiments of the first to sixth aspects.

An embodiment of this disclosure provides a storage medium storing a computer readable program, which will cause a terminal equipment to carry out the methods as described in any one of the embodiments of the first to sixth aspects.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.
1. A method for triggering a sidelink discontinuous reception (SL DRX) command, applicable to a first terminal equipment, the first terminal equipment performing sidelink transmission to a second terminal equipment, and the second terminal equipment using sidelink discontinuous reception (SL DRX), wherein the method includes:
   triggering a sidelink discontinuous reception command by an MAC layer of the first terminal equipment when one of the following conditions is satisfied that:
   a logical channel to which a destination or a pair of source ID and destination ID or a PC5 5G quality of service identifier (PC5 5G QoS identifier, PQI) corresponds has no data to be transmitted or has no data to be transmitted in a current service period or had no data to be transmitted in a past period of time or has no data to be transmitted when a timer expires;
   a destination or a pair of source ID and destination ID has no MAC CE to be transmitted or has no MAC CE to be transmitted in a current service period or had no MAC CE to be transmitted in a past period of time or has no MAC CE to be transmitted when a timer expires; and
   the upper layer of the first terminal equipment indicates the MAC layer of the first terminal equipment that there is no data to be transmitted or there is no data to be transmitted for a period of time.
2. The method according to supplement 1, wherein that a logical channel to which a destination or a pair of source ID and destination ID or a PQI corresponds has no data to be transmitted refers to that a buffer size of a logical channel to which a destination or a pair of source ID and destination ID or a PQI corresponds is 0.
3. The method according to supplement 1, wherein the current service period includes at least one of the following:
   a cycle of a sidelink service;
   a cycle of a sidelink discontinuous reception (SL DRX cycle);
   a timing cycle of a sidelink discontinuous reception on-duration timer (SL DRX on-duration timer);
   a timing cycle of a sidelink discontinuous reception inactivity timer (SL DRX inactivity timer).
4. The method according to supplement 1, wherein the timer includes at least one of the following:
   a timer that is configured by a network device or is predefined;
   a sidelink discontinuous reception on-duration timer (SL DRX on-duration timer); and
   a sidelink discontinuous reception inactivity timer (SL DRX inactivity timer).
5. The method according to supplement 1, wherein the time includes at least one of the following:
   a time that is configured by the network device or is predefined;
   a cycle of a sidelink service;
   a cycle of a sidelink discontinuous reception (SL DRX cycle);
   a timing cycle of a sidelink discontinuous reception on-duration timer (SL DRX on-duration timer); and
   a timing cycle of a sidelink discontinuous reception inactivity timer (SL DRX inactivity timer).
6. The method according to supplement 1, wherein the upper layer is one of the following: a vehicle-to-everything (V2X) layer, a non-access stratum (NAS), and a radio resource control (RRC) layer.
7. The method according to supplement 1, wherein the method further includes:
   canceling the sidelink discontinuous reception command by the MAC layer of the first terminal equipment when one of the following conditions is satisfied that:
   for a destination or a pair of source ID and destination ID or a PQI that the sidelink discontinuous reception command is triggered, new data arrive at a logical channel to which the destination or the pair of source ID and destination ID or the PQI corresponds;
   for a destination or a pair of source ID and destination ID that the sidelink discontinuous reception command is triggered, other MAC CEs are triggered;
   the upper layer of the first terminal equipment indicates the MAC layer of the first terminal equipment that data will arrive;
   a media access control control unit (MAC CE) of the sidelink discontinuous reception command is transmitted in the sidelink;
   the first terminal equipment receives hybrid automatic repeat request (HARQ) feedback transmitted by the second terminal equipment; and
   the upper layer of the first terminal equipment reconfigures discontinuous reception configuration.
8. The method according to supplement 7, wherein the upper layer is one of the following: a vehicle-to-everything (V2X) layer, a non-access stratum (NAS), and a radio resource control (RRC) layer.
9. The method according to supplement 7, wherein that the upper layer of the first terminal equipment reconfigures discontinuous reception configuration includes that:
   for a destination or a pair of source ID and destination ID or a PQI that the sidelink discontinuous reception command is triggered, the upper layer of the first terminal equipment reconfigures SL and/or DL discontinuous reception configuration.
7a. A method for canceling a sidelink discontinuous reception (SL DRX) command, applicable to a first terminal equipment, the first terminal equipment performing sidelink transmission to a second terminal equipment, and the second terminal equipment using sidelink discontinuous reception (SL DRX), wherein the method includes:
   canceling the sidelink discontinuous reception command by the MAC layer of the first terminal equipment when one of the following conditions is satisfied that:
   for a destination or a pair of source ID and destination ID or a PQI that the sidelink discontinuous reception command is triggered, new data arrive at a logical channel to which the destination or the pair of source ID and destination ID or the PQI corresponds;
   for a destination or a pair of source ID and destination ID that the sidelink discontinuous reception command is triggered, other MAC CEs are triggered;
   the upper layer of the first terminal equipment indicates the MAC layer of the first terminal equipment that data will arrive;
   a media access control control unit (MAC CE) of the sidelink discontinuous reception command is transmitted in the sidelink;
   the first terminal equipment receives hybrid automatic repeat request (HARQ) feedback transmitted by the second terminal equipment; and
   the upper layer of the first terminal equipment reconfigures discontinuous reception configuration.
8a. The method according to supplement 7a, wherein the upper layer is one of the following: a vehicle-to-everything (V2X) layer, a non-access stratum (NAS), and a radio resource control (RRC) layer.
9a. The method according to supplement 7a, wherein that the upper layer of the first terminal equipment reconfigures discontinuous reception configuration includes that:
   for a destination or a pair of source ID and destination ID or a PQI that the sidelink discontinuous reception command is triggered, the upper layer of the first terminal equipment reconfigures SL and/or DL discontinuous reception configuration.
10. A method for triggering a scheduling request to which a sidelink discontinuous reception command corresponds, applicable to a first terminal equipment, the first terminal equipment performing sidelink transmission to a second terminal equipment, and the second terminal equipment using sidelink discontinuous reception (SL DRX), wherein the method includes:
   triggering a first scheduling request to which a sidelink discontinuous reception command corresponds by the first terminal equipment after triggering the sidelink discontinuous reception command.
11. The method according to supplement 10, wherein the first terminal equipment triggers the first scheduling request to which the sidelink discontinuous reception command corresponds when one of the following conditions is satisfied that:
   there exists no sidelink resource used for new transmission;
   a sidelink resource used for new transmission is unable to accommodate a sidelink discontinuous reception command MAC CE and its sub-header; and
   a sidelink resource used for new transmission is unable to accommodate a sub-header of a sidelink discontinuous reception command MAC CE.
12. The method according to supplement 10, wherein the method further includes:
   triggering a second scheduling request to which the sidelink discontinuous reception command corresponds by the first terminal equipment after transmitting the sidelink discontinuous reception command.
13. The method according to supplement 12, wherein the first terminal equipment triggers the second scheduling request to which the sidelink discontinuous reception command corresponds when one of the following conditions is satisfied that:
   a sidelink resource used for new transmission is able to accommodate a sidelink discontinuous reception command MAC CE and its sub-header and all data waiting to be transmitted; and
   a sidelink resource used for new transmission is able to accommodate a sub-header of a sidelink discontinuous reception command MAC CE and all data waiting to be transmitted.
14. The method according to supplement 10 or 12, wherein the method further includes:
   receiving, by thee first terminal equipment, configuration information transmitted by the network device, the configuration information including at least one SR configuration; and
   transmitting the first scheduling request and/or the second scheduling request to which the sidelink discontinuous reception command corresponds by the first terminal equipment by using at least one SR configuration in the at least one SR configuration.
15. The method according to supplement 14, wherein the configuration information is contained in RRC signaling.
16. The method according to supplement 14, wherein the SR configuration includes PUCCH resources on a bandwidth part (BWP).
17. The method according to supplement 14, wherein the at least one SR configuration is at least one of the following:
   SR configuration configured by the network device for the sidelink discontinuous reception command MAC CE;
   SR configuration configured by the network device for a sidelink logical channel;
   SR configuration configured by the network device for a sidelink channel state information reporting MAC CE; and
   SR configuration configured by the network device for a logical channel or an MAC CE of a sidelink or an uplink.
18. The method according to supplement 10, wherein the method further includes:
   when a sidelink discontinuous reception command MAC CE is transmitted, canceling the first scheduling request to which the sidelink discontinuous reception command corresponds.
19. A method for selecting a resource pool, applicable to a first terminal equipment, the first terminal equipment performing sidelink transmission to a second terminal equipment, and the second terminal equipment using sidelink discontinuous reception (SL DRX), wherein the method includes:
   if a sidelink logical channel has data to be transmitted and a sidelink discontinuous reception command is triggered, selecting a resource pool by the first terminal equipment according to an HARQ feedback attribute of the sidelink logical channel or according to an HARQ feedback attribute of the sidelink discontinuous reception command based on priorities of the sidelink logical channel and the sidelink discontinuous reception command.
20. The method according to supplement 19, wherein if the priority of the sidelink logical channel is higher than or equal to the priority of the sidelink discontinuous reception command, when the HARQ feedback attribute of the sidelink logical channel is configured as being enabled, the first terminal equipment selects a resource pool configured with PSFCH resources from resource pools that are configured by the network device or preconfigured.
21. The method according to supplement 19, wherein if the priority of the sidelink discontinuous reception command is higher than that of the sidelink logical channel, when the HARQ feedback attribute of the sidelink discontinuous reception command is configured as being enabled, the first terminal equipment selects a resource pool configured with PSFCH resources from resource pools that are configured by the network device or preconfigured.
22. A method for selecting a logical channel, applicable to a first terminal equipment, the first terminal equipment performing sidelink transmission to a second terminal equipment, and the second terminal equipment using sidelink discontinuous reception (SL DRX), wherein the method includes:
   determining a sidelink resource used for transmitting sidelink data by the first terminal equipment; and
   selecting a destination by the first terminal equipment in a logical channel prioritization (LCP) procedure, the destination including a second logical channel or a second MAC CE with a highest priority in a first MAC CE and/or a first logical channel satisfying a predetermined condition, the first MAC CE satisfying the following condition that:
      if the sidelink resource is not configured with a PSFCH, an HARQ feedback attribute of the MAC CE is configured to be disabled.
23. A method for selecting a logical channel, applicable to a first terminal equipment, the first terminal equipment performing sidelink transmission to a second terminal equipment, and the second terminal equipment using sidelink discontinuous reception (SL DRX), wherein the method includes:
   determining a sidelink resource used for transmitting sidelink data by the first terminal equipment;
   if the sidelink resource is configured with a PSFCH and an HARQ feedback attribute to which a logical channel or sidelink discontinuous reception command MAC CE with a highest priority satisfying a predetermined condition corresponds is configured to be enabled, selecting a logical channel or sidelink discontinuous reception command MAC CE with the HARQ feedback attribute being configured to be enabled by the first terminal equipment in an LCP procedure; and
   if the sidelink resource is configured with a PSFCH and an HARQ feedback attribute to which a logical channel or sidelink discontinuous reception command MAC CE with a highest priority satisfying a predetermined condition corresponds is configured to be disabled, selecting a logical channel or sidelink discontinuous reception command MAC CE with the HARQ feedback attribute being configured to be disabled by the first terminal equipment in an LCP procedure.
24. A method for transmitting sidelink transmission, applicable to a first terminal equipment, the first terminal equipment performing sidelink transmission to a second terminal equipment, and the second terminal equipment using sidelink discontinuous reception (SL DRX), wherein the method includes:
   transmitting a sidelink discontinuous reception command MAC CE by the first terminal equipment to the second terminal equipment, the sidelink discontinuous reception command MAC CE having a configured or predefined priority.
25. The method according to supplement 24, wherein the method further includes:
   transmitting sidelink control information (SCI) by the first terminal equipment to the second terminal equipment, the sidelink control information indicating the priority of the sidelink discontinuous reception command MAC CE.
26. The method according to supplement 24, wherein the method further includes:
   determining to transmit sidelink transmission or uplink transmission by the first terminal equipment by using the configured or predefined priority.
27. The method according to supplement 24, wherein during the first terminal equipment performs the LCP procedure, the priority of the sidelink discontinuous reception command MAC CE is lower than a priority of a sidelink traffic channel data.
28. The method according to supplement 24, wherein the method further includes:
   generating an MAC PDU by the first terminal equipment in generating the sidelink discontinuous reception command MAC CE.
29. A method for generating a sidelink buffer status report, applicable to a first terminal equipment, the first terminal equipment performing sidelink transmission to a second terminal equipment, wherein the method includes:
   generating a sidelink buffer status report (SL BSR) by the first terminal equipment, a buffer size field in the sidelink buffer status report identifying at least one of the following:
   a total number of available data of all logical channels of a logical channel group of a destination after an MAC PDU is built, the MAC PDU including a sidelink buffer status report MAC CE, or the MAC PDU being a UL MAC PDU;
   a total number of available data of all logical channels of a logical channel group of a destination when an MAC PDU is built, the MAC PDU including a sidelink buffer status report MAC CE, or the MAC PDU being a UL MAC PDU;
   a total number of available data of all logical channels of a logical channel group of a destination when a sidelink buffer status report MAC CE is generated;
   a total number of available data of all logical channels of a logical channel group of a destination when a sidelink buffer status report MAC CE is triggered;
   a total number of available data of all logical channels of a logical channel group of a destination after a sidelink MAC PDU is built, wherein uplink transmission and sidelink transmission overlap in time and the first terminal equipment has the ability to simultaneously perform uplink transmission and sidelink transmission, and wherein after a sidelink LCP procedure, it will be resulted in that a value of a buffer size field is zero;
   transmitting the sidelink buffer status report by the first terminal equipment to a network device.
30. A terminal equipment, including a memory and a processor, the memory storing a computer program, and the processor being configured to execute the computer program to carry out the method as described in any one of supplements 1-29.
31. A communication system, including a first terminal equipment and a second terminal equipment, the first terminal equipment performing sidelink transmission to the second terminal equipment, and the second terminal equipment using sidelink discontinuous reception SL DRX, wherein,
   the first terminal equipment is configured to execute the computer program to carry out the method as described in any one of supplements 1-29.
32. The communication system according to supplement 32, wherein the communication system further includes a network device, the network device allocating sidelink resources for the first terminal equipment.

## Claims

1. An apparatus for triggering a sidelink discontinuous reception (SL DRX) command, configured in a first terminal equipment, the first terminal equipment performing sidelink transmission to a second terminal equipment, and the second terminal equipment using sidelink discontinuous reception (SL DRX), wherein the apparatus comprises:
a triggering unit configured to trigger a sidelink discontinuous reception command at the MAC layer of the first terminal equipment when one of the following conditions is satisfied that:
a logical channel to which a destination or a pair of source ID and destination ID or a PC5 5G quality of service identifier (PC5 5G QoS identifier, PQI) corresponds has no data to be transmitted or has no data to be transmitted in a current service period or had no data to be transmitted in a past period of time or has no data to be transmitted when a timer expires;
a destination or a pair of source ID and destination ID has no MAC CE to be transmitted or has no MAC CE to be transmitted in a current service period or had no MAC CE to be transmitted in a past period of time or has no MAC CE to be transmitted when a timer expires; and
the upper layer of the first terminal equipment indicates the MAC layer of the first terminal equipment that there is no data to be transmitted or there is no data to be transmitted for a period of time.

2. The apparatus according to claim 1, wherein that a logical channel to which a destination or a pair of source ID and destination ID or a PQI corresponds has no data to be transmitted refers to that a buffer size of a logical channel to which a destination or a pair of source ID and destination ID or a PQI corresponds is 0.

3. The apparatus according to claim 1, wherein the current service period comprises at least one of the following:
a cycle of a sidelink service;
a cycle of a sidelink discontinuous reception (SL DRX cycle);
a timing cycle of a sidelink discontinuous reception on-duration timer (SL DRX on-duration timer);
a timing cycle of a sidelink discontinuous reception inactivity timer (SL DRX inactivity timer).

4. The apparatus according to claim 1, wherein the timer comprises at least one of the following:
a timer that is configured by a network device or is predefined;
a sidelink discontinuous reception on-duration timer (SL DRX on-duration timer); and
a sidelink discontinuous reception inactivity timer (SL DRX inactivity timer).

5. The apparatus according to claim 1, wherein the time comprises at least one of the following:
a time that is configured by the network device or is predefined;
a cycle of a sidelink service;
a cycle of a sidelink discontinuous reception (SL DRX cycle);
a timing cycle of a sidelink discontinuous reception on-duration timer (SL DRX on-duration timer); and
a timing cycle of a sidelink discontinuous reception inactivity timer (SL DRX inactivity timer).

6. The apparatus according to claim 1, wherein the upper layer is one of the following: a vehicle-to-everything (V2X) layer, a non-access stratum (NAS), and a radio resource control (RRC) layer.

7. The apparatus according to claim 1, wherein the apparatus further comprises:
a canceling unit configured to cancel the sidelink discontinuous reception command at the MAC layer of the first terminal equipment when one of the following conditions is satisfied that:
for a destination or a pair of source ID and destination ID or a PQI that the sidelink discontinuous reception command is triggered, new data arrive at a logical channel to which the destination or the pair of source ID and destination ID or the PQI corresponds;
for a destination or a pair of source ID and destination ID that the sidelink discontinuous reception command is triggered, other MAC CEs are triggered;
the upper layer of the first terminal equipment indicates the MAC layer of the first terminal equipment that data will arrive;
a media access control control unit (MAC CE) of the sidelink discontinuous reception command is transmitted in the sidelink;
the first terminal equipment receives hybrid automatic repeat request (HARQ) feedback transmitted by the second terminal equipment; and
the upper layer of the first terminal equipment reconfigures discontinuous reception configuration.

8. The apparatus according to claim 7, wherein the upper layer is one of the following: a vehicle-to-everything (V2X) layer, a non-access stratum (NAS), and a radio resource control (RRC) layer.

9. The apparatus according to claim 7, wherein that the upper layer of the first terminal equipment reconfigures discontinuous reception configuration comprises that:
for a destination or a pair of source ID and destination ID or a PQI that the sidelink discontinuous reception command is triggered, the upper layer of the first terminal equipment reconfigures SL and/or DL discontinuous reception configuration.

10. An apparatus for triggering a scheduling request to which a sidelink discontinuous reception command corresponds, configured in a first terminal equipment, the first terminal equipment performing sidelink transmission to a second terminal equipment, the second terminal equipment using sidelink discontinuous reception (SL DRX), wherein the apparatus comprises:
a first triggering unit configured to trigger a first scheduling request to which a sidelink discontinuous reception command corresponds after the first terminal equipment triggers the sidelink discontinuous reception command.

11. The apparatus according to claim 10, wherein the first triggering unit triggers the first scheduling request to which the sidelink discontinuous reception command corresponds when one of the following conditions is satisfied that:
there exists no sidelink resource used for new transmission;
a sidelink resource used for new transmission is unable to accommodate a sidelink discontinuous reception command MAC CE and its sub-header; and
a sidelink resource used for new transmission is unable to accommodate a sub-header of a sidelink discontinuous reception command MAC CE.

12. The apparatus according to claim 10, wherein the apparatus further comprises:
a second triggering unit configured to trigger a second scheduling request to which the sidelink discontinuous reception command corresponds after the first terminal equipment transmits the sidelink discontinuous reception command.

13. The apparatus according to claim 12, wherein the second triggering unit triggers the second scheduling request to which the sidelink discontinuous reception command corresponds when one of the following conditions is satisfied that:
a sidelink resource used for new transmission is able to accommodate a sidelink discontinuous reception command MAC CE and its sub-header and all data waiting to be transmitted; and
a sidelink resource used for new transmission is able to accommodate a sub-header of a sidelink discontinuous reception command MAC CE and all data waiting to be transmitted.

14. The apparatus according to claim 10, wherein the apparatus further comprises:
a receiving unit configured to receive configuration information transmitted by a network device, the configuration information comprising at least one SR configuration; and
a transmitting unit configured to transmit the first scheduling request and/or the second scheduling request to which the sidelink discontinuous reception command corresponds by using at least one SR configuration in the at least one SR configuration.

15. The apparatus according to claim 14, wherein the configuration information is contained in RRC signaling.

16. The apparatus according to claim 14, wherein the SR configuration comprises PUCCH resources on a bandwidth part (BWP).

17. The apparatus according to claim 14, wherein the at least one SR configuration is at least one of the following:
SR configuration configured by the network device for the sidelink discontinuous reception command MAC CE;
SR configuration configured by the network device for a sidelink logical channel;
SR configuration configured by the network device for a sidelink channel state information reporting MAC CE, and
SR configuration configured by the network device for a logical channel or an MAC CE of a sidelink or an uplink.

18. The apparatus according to claim 10, wherein the apparatus further comprises:
a canceling unit configured to, when a sidelink discontinuous reception command MAC CE is transmitted, cancel the first scheduling request to which the sidelink discontinuous reception command corresponds.

19. A communication system, comprising a first terminal equipment and a second terminal equipment, the first terminal equipment performing sidelink transmission to the second terminal equipment, and the second terminal equipment using sidelink discontinuous reception (SL DRX), wherein,
the first terminal is configured to perform at least one of the following processings:
processing 1:
triggering a sidelink discontinuous reception command at the MAC layer of the first terminal equipment when one of the following conditions is satisfied that:
a logical channel to which a destination or a pair of source ID and destination ID or a PC5 5G quality of service identifier (PC5 5G QoS identifier, PQI) corresponds has no data to be transmitted or has no data to be transmitted in a current service period or had no data to be transmitted in a past period of time or has no data to be transmitted when a timer expires;
a destination or a pair of source ID and destination ID has no MAC CE to be transmitted or has no MAC CE to be transmitted in a current service period or had no MAC CE to be transmitted in a past period of time or has no MAC CE to be transmitted when a timer expires; and
an upper layer of the first terminal equipment indicates the MAC layer of the first terminal equipment that there is no data to be transmitted or there is no data to be transmitted for a period of time;
processing 2:
canceling the sidelink discontinuous reception command at the MAC layer of the first terminal equipment when one of the following conditions is satisfied that:
for a destination or a pair of source ID and destination ID or a PQI that the sidelink discontinuous reception command is triggered, new data arrive at a logical channel to which the destination or the pair of source ID and destination ID or the PQI corresponds;
for a destination or a pair of source ID and destination ID that the sidelink discontinuous reception command is triggered, other MAC CEs are triggered;
the upper layer of the first terminal equipment indicates the MAC layer of the first terminal equipment that data will arrive;
a media access control control unit (MAC CE) of the sidelink discontinuous reception command is transmitted in the sidelink;
the first terminal equipment receives hybrid automatic repeat request (HARQ) feedback transmitted by the second terminal equipment; and
the upper layer of the first terminal equipment reconfigures discontinuous reception configuration;
processing 3:
triggering a first scheduling request to which a sidelink discontinuous reception command corresponds after the first terminal equipment triggers the sidelink discontinuous reception command;
processing 4:
triggering a second scheduling request to which a sidelink discontinuous reception command corresponds after the first terminal equipment transmits the sidelink discontinuous reception command;
processing 5:
if a sidelink logical channel has data to be transmitted and the sidelink discontinuous reception command is triggered, selecting a resource pool by the first terminal equipment according to an HARQ feedback attribute of the sidelink logical channel or according to an HARQ feedback attribute of the sidelink discontinuous reception command based on priorities of the sidelink logical channel and the sidelink discontinuous reception command;
processing 6:
determining a sidelink resource used for transmitting sidelink data by the first terminal equipment;
selecting a destination by the first terminal equipment in a logical channel prioritization (LCP) procedure, the destination including a second logical channel or a second MAC CE with a highest priority in a first MAC CE and/or a first logical channel satisfying a predetermined condition, the first MAC CE satisfying the following condition that:
if the sidelink resource is not configured with a PSFCH, an HARQ feedback attribute of the MAC CE is configured to be disabled;
processing 7:
determining a sidelink resource used for transmitting sidelink data by the first terminal equipment;
if the sidelink resource is configured with a PSFCH and an HARQ feedback attribute to which a logical channel or sidelink discontinuous reception command MAC CE with a highest priority satisfying a predetermined condition corresponds is configured to be enabled, selecting a logical channel or sidelink discontinuous reception command MAC CE with the HARQ feedback attribute being configured to be enabled by the first terminal equipment in an LCP procedure; and
if the sidelink resource is configured with a PSFCH and an HARQ feedback attribute to which a logical channel or sidelink discontinuous reception command MAC CE with a highest priority satisfying a predetermined condition corresponds is configured to be disabled, selecting a logical channel or sidelink discontinuous reception command MAC CE with the HARQ feedback attribute being configured to be disabled by the first terminal equipment in an LCP procedure;
processing 8:
transmitting a sidelink discontinuous reception command MAC CE (SL DRX command MAC CE) by the first terminal equipment to the second terminal equipment, the sidelink discontinuous reception command MAC CE having a configured or predefined priority;
processing 9:
generating a sidelink buffer status report (SL BSR) by the first terminal equipment, a buffer size field in the sidelink buffer status report identifying at least one of the following:
a total number of available data of all logical channels of a logical channel group of a destination after an MAC PDU is built, the MAC PDU including a sidelink buffer status report MAC CE, or the MAC PDU being a UL MAC PDU;
a total number of available data of all logical channels of a logical channel group of a destination when an MAC PDU is built, the MAC PDU including a sidelink buffer status report MAC CE, or the MAC PDU being a UL MAC PDU;
a total number of available data of all logical channels of a logical channel group of a destination when an MAC CE of a sidelink buffer status report is generated;
a total number of available data of all logical channels of a logical channel group of a destination when an MAC CE of a sidelink buffer status report is triggered;
a total number of available data of all logical channels of a logical channel group of a destination after a sidelink MAC PDU is built, wherein uplink transmission and sidelink transmission overlap in time and the first terminal equipment has the ability to simultaneously perform uplink transmission and sidelink transmission, and wherein after a sidelink LCP procedure, it will be resulted in that a value of a buffer size field is zero; and
transmitting the sidelink buffer status report by the first terminal equipment to the network device.

20. The communication system according to claim 19, wherein the communication system further comprises a network device, the network device allocating sidelink resources for the first terminal equipment.
